(19) Europäisches Patentamt
European Patent Office
Office européen des brevets

(11) **EP 2 758 824 B1**

(12) **EUROPÄISCHE PATENTSCHRIFT**

(45) Veröffentlichungstag und Bekanntmachung des Hinweises auf die Patenterteilung:
**22.04.2020  Patentblatt 2020/17**

(51) Int Cl.:
***G02B 21/08*** *(2006.01)*

(21) Anmeldenummer: **12756359.1**

(86) Internationale Anmeldenummer:
**PCT/EP2012/003496**

(22) Anmeldetag: **16.08.2012**

(87) Internationale Veröffentlichungsnummer:
**WO 2013/041171 (28.03.2013 Gazette 2013/13)**

(54) **VORRICHTUNG UND VERFAHREN ZUR DURCHLICHTBELEUCHTUNG FÜR LICHTMIKROSKOPE UND MIKROSKOPSYSTEM**

TRANSILLUMINATION DEVICE AND METHOD FOR LIGHT MICROSCOPES, AND A MICROSCOPE SYSTEM

DISPOSITIF ET PROCÉDÉ D'ÉCLAIRAGE PAR TRANSMISSION POUR DES MICROSCOPES OPTIQUES ET SYSTÈME DE MICROSCOPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2011  DE 102011114210**

(43) Veröffentlichungstag der Anmeldung:
**30.07.2014  Patentblatt 2014/31**

(73) Patentinhaber: **Carl Zeiss Microscopy GmbH**
**07745 Jena (DE)**

(72) Erfinder:
• **HEIN, Detlef**
**37083 Göttingen (DE)**
• **LASCHKE, Axel**
**37130 Gleichen (DE)**

(74) Vertreter: **Schiffer, Axel Martin et al**
**Rundfunkplatz 2**
**80335 München (DE)**

(56) Entgegenhaltungen:
**EP-A1- 1 498 707      DE-A1-102007 005 790**
**US-A1- 2001 005 280   US-A1- 2005 259 320**
**US-A1- 2009 303 582**

EP 2 758 824 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich in einem ersten Gesichtspunkt auf eine Vorrichtung zur Durchlichtbeleuchtung für Lichtmikroskope mit veränderlicher wirksamer Eintrittspupille eines Objektivs nach dem Oberbegriff des Anspruchs 1.

In einem weiteren Aspekt betrifft die Erfindung ein Verfahren zur Durchlichtbeleuchtung für ein Lichtmikroskop mit veränderlicher wirksamer Eintrittspupille eines Objektivs nach dem Oberbegriff des Anspruchs 10. Außerdem bezieht sich die Erfindung auf ein Mikroskopsystem.

Eine gattungsgemäße Vorrichtung zur Durchlichtbeleuchtung für Lichtmikroskope ist beispielsweise in DE 10 2004 056 685 A1 beschrieben und weist eine Lichtquelle zum Aussenden eines Beleuchtungslichtbündels und eine Halteeinrichtung zum Halten einer zu untersuchenden Probe auf. Außerdem ist mindestens eine Blendenkante zum Beschneiden des Beleuchtungslichtbündels vorhanden, die zwischen der Halteeinrichtung und der Lichtquelle angeordnet ist und die sich quer zu einer optischen Achse, insbesondere eines Objektivs, eines Lichtmikroskops erstreckt, welches in einem Betriebszustand an der Vorrichtung zur Durchlichtbeleuchtung positionierbar ist. Ein Strahlengang des Beleuchtungslichts zwischen der Blendenkante und einer von der Halteeinrichtung gehaltenen Probe ist dabei frei von verstellbaren strahlfokussierenden Komponenten.

Bei einem gattungsgemäßen Verfahren zur Durchlichtbeleuchtung für ein Lichtmikroskop mit veränderlicher wirksamer Eintrittspupille eines Objektivs wird eine von einer Halteeinrichtung gehaltene Probe mit Beleuchtungslicht von einer Lichtquelle beaufschlagt und ein von der Lichtquelle ausgehendes Beleuchtungslichtbündel wird von einer zwischen der Halteeinrichtung und der Lichtquelle angeordneten Blendenkante beschnitten. Hierbei kann insbesondere ein Strahlengang des Beleuchtungslichts zwischen der Blendenkante und der von der Halteeinrichtung gehaltenen Probe frei sein von verstellbaren strahlfokussierenden Komponenten.

In DE 10 2004 056 685 A1 ist eine Beleuchtungseinrichtung mit zwei schwenkbaren Blenden beschrieben. Der Drehpunkt der Blenden ist dabei fixiert und lässt sich nicht verschieben. Außerdem gibt es keine Mittel zur Erfassung, Speicherung und/oder Reproduzierung von den Beleuchtungseinstellungen der schwenkbaren Blenden oder automatisch an das Objekt angepasste Voreinstellung. Die in DE 10 2004 056 685 A1 beschriebene Beleuchtungseinrichtung ist deshalb wenig komfortabel in der Bedienung.

In DE 10 2007 005 790 A1 ist eine Blendenanordnung in einem Durchlichtstrahlengang beschrieben. Die Blendenanordnung weist vier Blendensegmente auf, welche relativ zueinander in einer Ebene senkrecht zu einer optischen Achse verschiebbar sind. Eine Einstellung der Blenden muss manuell erfolgen, wodurch die Bedienung erschwert wird.

In US 2009/0303582 A1 ist ein Mikroskopsystem beschrieben, bei dem eine im Durchmesser variable Feldblende in einer zur Fokalebene des Objektivs konjugierten Position angeordnet ist. Eine Steuerung soll dabei dafür sorgen, dass der Durchmesser der Feldblende immer größer ist als das betrachtete Bild.

DE 10 2007 005 790 A1 betrifft eine variable Blende mit einer Mehrzahl von Blendenelementen, die, jeweils separat, mit Hilfe eines Rechners angesteuert werden können.

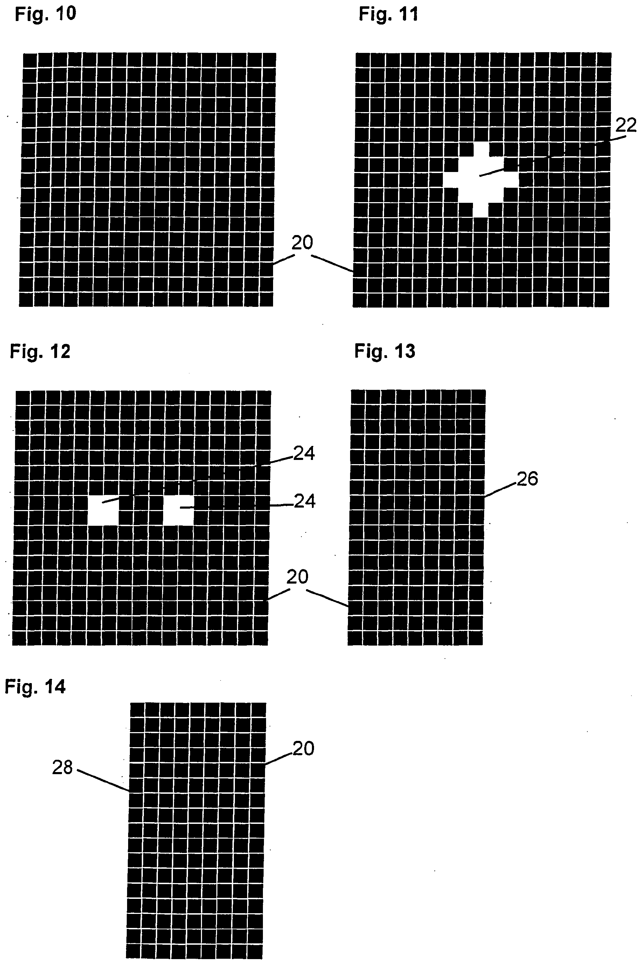

In US 2001/0005280 A1 sind ein Stereomikroskop und eine Durchlichtquelle beschrieben. Im Zusammenhang mit Figur 10 ist eine Durchlichtquelle offenbart, bei der eine Blendenkante senkrecht zur optischen Achse in den Strahlengang hineingeschoben werden kann.

US 4643540 A offenbart ein Mikroskopsystem, bei dem kreisförmige Blenden automatisiert eingestellt werden können.

US 2005259320 A1 beschreibt ein Mikroskop, bei dem eine Blendenanordnung in Richtung einer optischen Achse bewegt werden kann.

Nachteilig ist bei den beschriebenen Beleuchtungseinrichtungen zudem, dass das Einstellen einer korrekten Durchlichtbeleuchtung sehr zeitaufwändig ist und auch ein gewisses Basiswissen erfordert. Optimale Beleuchtungseinstellungen werden daher häufig nicht oder nur durch Zufall gefunden. Aufgrund der Vielzahl an Einstellmöglichkeiten und Bedienelementen lassen sich die einmal gefundenen Einstellungen in der Regel auch nicht wieder exakt reproduzieren.

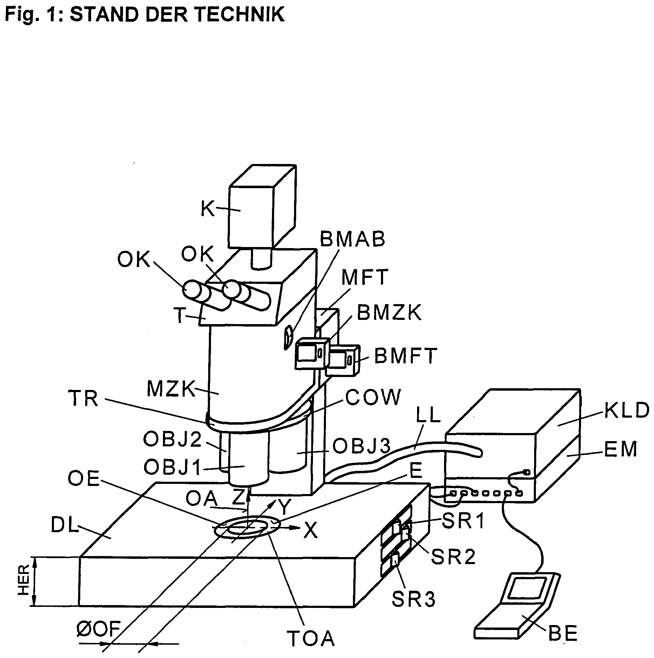

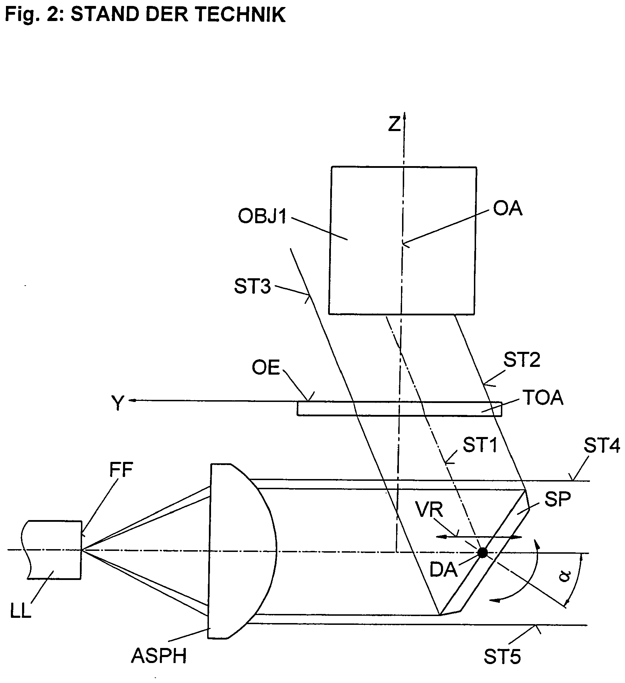

Der Stand der Technik wird anhand der Figuren 1 und 2 näher erläutert.

Figur 1 zeigt eine typische Stereomikroskop-Anordnung nach dem Stand der Technik. Eine Durchlichteinrichtung DL leuchtet das Objektfeld mit einem Durchmesser OF aus, das sich in der Ebene OE befindet, die durch die am höchsten liegende Fläche der Durchlichteinrichtung DL gekennzeichnet ist. Auf der Durchlichteinrichtung DL befindet sich eine motorisierte Fokussiereinrichtung MFT, die sich über eine Bedieneinheit BMFT bedienen lässt und an der ein Träger TR mit einem codierten Objektivwechsler COW angebracht ist. Über den Objektivwechsler COW lassen sich drei Objektive OBJ1, OBJ2, OBJ3 mit unterschiedlichen Eigenschaften benutzen. Beispielsweise hat das Objektiv OBJ2 neben einer anderen Objektivvergrößerung bei dem kleinsten Zoomfaktor β auch eine deutlich weiter von der Objektebene OE entfernt liegende Eintrittspupille, als die beiden anderen Objektive.

Mit dem Bezugszeichen BMAB ist in Figur 1 ein Bedienelement für eine motorisierte Aperturblende MAP gekennzeichnet. Eine Ebene in Höhe der Objektauflage auf der Durchlichteinrichtung ist mit E bezeichnet. MFT kennzeichnet eine motorisierte Fokussiereinrichtung.

Auf dem Träger TR ist ein motorisierter Zoomkörper MZK angeordnet, der sich über eine Bedieneinheit BMZK bedienen lässt. Auf dem motorisierten Zoomkörper MZK befindet sich ein Tubus T, mit dem sich das Stereomikroskopbild direkt über die beiden Okulare OK beobachten lässt. Außerdem ermöglicht der Tubus T über eine angeschlossene Kamera K auch die Dokumentation der betrachteten Bilder.

Die im Stand der Technik nicht motorisierte Durchlichteinrichtung DL wird durch eine Kaltlichtquelle KLD über einen faseroptischen Lichtleiter LL mit Licht versorgt; sie hat drei manuell einstellbare Bedienelemente SR1, SR2, SR3 zur Variation der Beleuchtungseinstellungen.

Die Steuerung des Gesamtsystems erfolgt durch das Elektronikmodul EM und die daran angeschlossene Bedieneinheit BE. Die Kommunikation innerhalb des Gesamtsystems wird beispielsweise über einen CAN-Bus realisiert.

Zur weiteren Betrachtung wird ein Koordinatensystem mit den Koordinatenachsen X, Y und Z eingeführt. Der Koordinatenursprung liegt im Zentrum der Objektebene OE. Aus Vereinfachungsgründen wird in dieser Darstellung die Oberseite der transparenten Objektauflage TOA anfokussiert, das heißt OE ist identisch mit der Oberseite der transparenten Objektauflage TOA und liegt in der Ebene, die aus den Koordinatenachsen X und Y aufgespannt wird. Die positiven Halbachsen zeigen vom Benutzer aus gesehen in folgende Richtungen: X nach rechts, Y nach hinten, Z nach oben. Die Z-Achse ist identisch mit der optischen Achse OA des gerade eingeschalteten Objektivs.

Für Stereomikroskope und Makroskope gibt es zahlreiche Durchlicht-Beleuchtungsverfahren, die hauptsächlich aufgrund der Zoomfunktion des Zoomkörpers MZK nicht für alle möglichen Abbildungsbedingungen eine geeignete Ausleuchtung liefern können. Dies gilt besonders für den Übersichtsbereich, das heißt für die kleineren Zoomfaktoren des Zoomkörpers. Häufig wird die Beleuchtung von Stereomikroskopen und Makroskopen mit geeigneten Mitteln, zum Beispiel mit Milchüberfanggläsern, homogenisiert. Dadurch verbessert sich zwar die Homogenität der Ausleuchtung, allerdings nehmen der Kontrast und die Helligkeit aufgrund der Lichtverteilung in größere Raumwinkelbereiche entsprechend ab, das störende Streulicht nimmt zu. Somit liefern die entsprechend ausgeleuchteten Übersichtsabbildungen nur sehr schlechte Kontraste, viele Details lassen sich erst mit größeren Zoomfaktoren $\beta$ erkennen. Das hierdurch erforderliche Hoch- und Herunterzoomen erfordert viel Zeit und die Übersicht geht während des Zoomvorgangs bei größeren Zoomfaktoren $\beta$ verloren.

Figur 2 zeigt das Funktionsprinzip einer bekannten Durchlichteinrichtung DL aus Figur 1. Die Frontfläche FF des Lichtleiters LL wird über eine Asphäre ASPH näherungsweise nach Unendlich abgebildet, das heißt die von einem gemeinsamen Punkt der Frontfläche FF des Lichtleiters LL ausgehenden Lichtstrahlen verlaufen nach der Asphäre ASPH parallel. Als Beispiel sind in Figur 2 die Lichtstrahlen ST1, ST2, ST3, ST4 und ST5 ausgehend von einem gemeinsamen Punkt auf dem Lichtleiter LL dargestellt. Hinter der Asphäre ASPH befindet sich ein Umlenkspiegel SP, der sich über die drei in Figur 1 dargestellten Bedienelemente SR1, SR2, SR3 in verschiedene Richtungen bewegen oder drehen lässt.

Über das Bedienelement SR1 wird der Spiegel SP um die Drehachse DA bis zum gewünschten Einstellwinkel $\alpha$ gedreht, wodurch die auf den Umlenkspiegel SP treffenden Lichtstrahlen in die entsprechenden Richtungen umgelenkt werden können. Mit dem Bedienelement SR2 lässt sich der Umlenkspiegel SP zusammen mit der Drehachse DA in der Verschieberichtung VR bewegen. Dadurch treten die vom Umlenkspiegel SP reflektierten Lichtstrahlen abhängig von der Spiegelposition an verschiedenen Punkten durch die transparente Objektauflage TOA und die Objektebene OE hindurch.

Über das Bedienelement SR3 wird der Umlenkspiegel SP in der X-Richtung, also senkrecht zur Darstellungsebene, bewegt. Dadurch wird ohne Änderung der Spiegelgeometrie eine andere Spiegeloberfläche mit abweichenden Reflexionseigenschaften wirksam. Beide benutzbaren Spiegeloberflächen reflektieren nicht zu 100% gerichtet, das heißt sie reflektieren diffus streuend, wobei der Streuanteil beider Spiegeloberflächen unterschiedlich groß ist. Um eine möglichst homogene Beleuchtung zu erzielen, ist die stärker streuende Spiegeloberfläche zu benutzen, wodurch sich der Kontrast verschlechtert und die Bildhelligkeit abnimmt. Eine rotationssymmetrische Durchlicht-Hellfeld-Beleuchtung lässt sich realisieren, wenn der Umlenkspiegel SP so eingestellt wird, dass der Hauptstrahl, also der Lichtstrahl ST1 deckungsgleich mit der optischen Achse OA des Objektivs in das Objektiv OBJ1 eintritt. Dies ist dann der Fall, wenn der Einstellwinkel $\alpha$ = 45° beträgt und der Auftreffpunkt des Lichtstrahls ST1 auf dem Umlenkspiegel SP auf der optischen Achse OA des Objektivs OBJ1 liegt. Der Umlenkspiegel SP lenkt dann das von hinten aus der positiven Y-Richtung kommende Licht nach oben in Richtung der positiven Z-Achse um.

Auf Kosten der Homogenität lässt sich der Kontrast steigern, wenn die schwächer streuende Spiegeloberfläche benutzt wird, was einer eher gerichteten Beleuchtung entspricht. Bei höheren Vergrößerungen lässt sich eine deutliche Kontrastverstärkung bei noch brauchbarer Homogenität erzielen, wenn eine Schräglichtbeleuchtung eingesetzt wird. Hierzu wird der Umlenkspiegel SP gedreht und in der Verschieberichtung VR so weit verschoben, bis das Objektiv OBJ1 in der gewünschten Weise ausgeleuchtet wird. Hierbei kann eine weitere Kontraststeigerung beobachtet werden, wenn die Spiegelkanten wirksam werden, das heißt wenn sprunghafte Helligkeitsunterschiede in der Beleuchtung für eine Kontraststeigerung genutzt werden können. Dieser Effekt wirkt aber nur in relativ kleinen Bereichen des Objektfelds, das heißt homogene Beleuchtungen für größere Übersichts-Objektfelder lassen sich damit nicht realisieren.

Das Einstellen der beschriebenen Beleuchtungsparameter erfordert vom Benutzer eine gewisse Erfahrung, das heißt ungeübte Benutzer sind mit der Beleuchtungseinstellung über die drei Bedienelemente SR1, SR2, SR3 ohne weitere Hilfestellung gegebenenfalls überfordert.

Durchlichteinrichteinrichtungen DL, die einen neigbaren Umlenkspiegel SP gemäß Figur 2 enthalten, erfordern zur Ausleuchtung von größeren Objektfeldern aus konstruktiven Gründen außerdem eine relativ große Bauhöhe. Trotzdem ist die erreichbare Homogenität und Kontrastierung auch bei einer großen Bauhöhe mit dieser Anordnung noch nicht optimal.

Bei normalen Lichtmikroskopen und einigen Makroskopen sind Durchlicht-Beleuchtungsverfahren bekannt, die eine feste Pupillenebene voraussetzen. Dann werden meistens kontraststeigernde Elemente in den Beleuchtungsstrahlengang und/oder den Abbildungsstrahlengang gebracht, insbesondere in die Objektivpupille oder eine hierzu konjugierte Ebene. Dies ist extrem aufwändig und lässt sich an Zoomsystemen, also auch an Stereomikroskopen und Makroskopen, wenn überhaupt, nur mit starken Einschränkungen realisieren. Diese klassischen Verfahren funktionieren nur mit speziellen Objektiven mit teurem Zubehör, zum Beispiel DIC-Schieber, und nur in bestimmten Zoombereichen. Das Optik-Design erfordert ungünstig große Bauräume sowie gegebenenfalls spannungsfreie Optiken für Polarisationsverfahren. Außerdem muss in der Beleuchtungseinrichtung eine Möglichkeit zur Manipulation der kontraststeigernden Elemente sowie in der Regel auch eine Möglichkeit zur Anpassung an verschieden große Objektfelder durch wechselbare Kondensorlinsen vorhanden sein. Diese Lösungen sind somit nur für spezielle Anwendungen geeignet und zudem sehr teuer.

Sämtliche Lösungen im Stand der Technik sind aufwändig in der Realisierung und/oder lassen im Hinblick auf Bedienbarkeit und Benutzerfreundlichkeit zu wünschen übrig.

Als eine **Aufgabe** der Erfindung kann angesehen werden, eine Vorrichtung und ein Verfahren zur Durchlichtbeleuchtung für Lichtmikroskope und ein hierauf basierendes Mikroskopsystem zu schaffen, welches prinzipiell mit einfachen technischen Mitteln zu verwirklichen ist. Außerdem soll im Vergleich zum Stand der Technik die Bedienbarkeit verbessert werden.

Diese Aufgabe wird in einem ersten Gesichtspunkt durch die Vorrichtung mit den Merkmalen des Anspruchs 1 gelöst.

In verfahrensmäßiger Hinsicht wird die Vorrichtung durch das Verfahren mit den Merkmalen des Anspruchs 10 gelöst. Außerdem wird durch die Erfindung ein Mikroskopsystem mit den Merkmalen des Anspruchs 12 bereitgestellt.

Vorteilhafte Ausführungsbeispiele der erfindungsgemäßen Vorrichtung und bevorzugte Varianten des erfindungsgemäßen Verfahrens werden im Folgenden mit Bezug auf die abhängigen Ansprüche und insbesondere im Zusammenhang mit den beigefügten Figuren erläutert.

Eine Vorrichtung der oben genannten Art ist erfindungsgemäß dadurch weitergebildet, dass Mittel zum Abfragen einer Mikroskopeinstellung und/oder einer Mikroskopkonfiguration eines Lichtmikroskops vorhanden sind, welches an der Vorrichtung zur Durchlichtbeleuchtung positionierbar ist, dass Mittel zum variablen Positionieren der Blendenkante in Richtung quer zu der optischen Achse vorhanden sind und dass außerdem eine Steuereinrichtung vorhanden ist, welche dazu eingerichtet ist, abhängig von der Mikroskopeinstellung und der Mikroskopkonfiguration die Blendenkante mit den Mitteln zum variablen Positionieren der Blendenkante in Richtung quer zur optischen Achse zu positionieren.

Das Verfahren der oben genannten Art ist erfindungsgemäß dadurch weitergebildet, dass eine Mikroskopeinstellung und/oder eine Mikroskopkonfiguration abgefragt wird und dass die Blendenkante sich quer zu einer optischen Achse erstreckt und abhängig von der Mikroskopeinstellung und der Mikroskopkonfiguration in Richtung quer zu der optischen Achse positioniert wird.

Schutz wird außerdem beansprucht für ein Mikroskopsystem, welches ein Lichtmikroskop und eine erfindungsgemäße Vorrichtung zur Durchlichtbeleuchtung aufweist.

Als ein erster Kerngedanke der Erfindung kann erachtet werden, das von der Lichtquelle ausgesandte Beleuchtungslicht mit einer Blendenkante zu beschneiden, wobei die Blendenkante in Richtung quer zur optischen Achse je nach der Mikroskopeinstellung und/oder der Mikroskopkonfiguration des angeschlossenen Lichtmikroskops einstellbar ist.

Das Positionieren der Blendenkante kann vorzugsweise automatisch nach Aufforderung durch einen Benutzer abhängig von der Mikroskopeinstellung erfolgen. Eigenschaften des abbildenden Systems können somit automatisch berücksichtigt werden. Bei einer besonders einfach aufgebauten Variante sind zwischen der Blendenkante und der Probe gar keine strahlfokussierenden Komponenten, insbesondere gar keine strahlformenden Komponenten vorhanden.

Mit dem Begriff der optischen Achse ist für die vorliegende Beschreibung im Wesentlichen und in der Regel die optische Achse eines Objektivs eines Lichtmikroskops gemeint, welches in einem Betriebszustand an der erfindungsgemäßen Vorrichtung zur Durchlichtbeleuchtung angeordnet oder positioniert ist.

Wenn es sich bei dem angeschlossenen Lichtmikroskop um ein Stereomikroskop mit zueinander geneigten Mittenlichtstrahlen LM und RM handelt, kann mit dem Begriff der optischen Achse sowohl

i) die optische Achse des Objektives, in dem Falle, dass das Objektiv nur einen Beobachtungskanal symmetrisch erfasst,

ii) die Winkelhalbierende zwischen den beiden Mittenlichtstrahlen, wenn durch das Objektiv beide Beobachtungskanäle erfasst werden, oder aber

iii) der Mittenlichtstrahl nur eines Kanals, wenn nur ein Beobachtungskanal nicht symmetrisch erfasst wird,

bezeichnet werden.

Sodann kann der Begriff der optischen Achse auch im Hinblick auf die erfindungsgemäße Vorrichtung zur Durchlichtbeleuchtung selbst in dem Sinn definiert werden, dass damit im Wesentlichen die Richtung gemeint ist, in welcher das Beleuchtungslicht abgestrahlt wird. In einem gewöhnlichen Fall ist die erfindungsgemäße Vorrichtung zur Durchlichtbeleuchtung als im Wesentlichen flacher Kasten gebildet, der beispielsweise auf einem Labortisch liegt. In diesem Fall weist die optische Achse in Richtung der vertikalen Richtung, also in Richtung der Z-Richtung.

Der Begriff der Halteeinrichtung ist für die Zwecke der vorliegenden Beschreibung funktional auszulegen, das heißt dass damit jedes Mittel gemeint ist, mit welchem eine zu untersuchende Probe in irgendeiner Weise relativ zu dem Beleuchtungslichtbündel und der Optik eines anzuschließenden Lichtmikroskops positioniert werden kann.

Sodann ist der Begriff der wirksamen Eintrittspupille phänomenologisch auszulegen. Es handelt sich dabei demgemäß nicht um eine errechnete oder theoretische Eintrittspupille des optischen Systems, sondern faktisch um denjenigen Bereich, in welchem eine Taille des Beleuchtungslichtstrahles, womit nur Strahlungsanteile gemeint sind, welche tatsächlich zur Abbildung beitragen, eine minimalen Querschnitt aufweisen. Dieser, vorliegend als wirksame Eintrittspupille bezeichnete Flächenbereich, wird durch Messen, also durch Ausprobieren ermittelt. In der Praxis hängt die Lage dieser wirksamen Eintrittspupille neben den verwendeten Optiken auch von der untersuchten Probe und von Probenhalterungen, wie Objektträgern oder sonstigen transparenten Probenauflagen, ab und ist bei gewöhnlichen Zoommikroskopen keine wohldefinierte ebene Fläche.

Bevorzugt umfasst die Mikroskopeinstellung mindestens das verwendete Objektiv, einen verwendeten Zoomkörper und eine mit dem Zoomkörper eingestellte Vergrößerung. Bei Kenntnis dieser Komponenten kann die Blendenkante an eine optimale Position bewegt werden, welche für die verwendete Objektiv-Zoomkörper-Kombination vorab bestimmt und gespeichert worden sein kann. Die optimale Position kann insbesondere entlang der Richtung der optischen Achse der Lage der Eintrittspupille entsprechen. An dieser weist der Beleuchtungsstrahlengang des Lichtmikroskops eine Taille auf.

Eine Mikroskopkonfiguration umfasst erfindungsgemäß mindestens einen Typ eines Zoomsystems und eines ausgewählten Objektivs. Die Begriffe Mikroskoptyp und Typ des Zoomsystems können synonym verwendet werden.

Eine Mikroskopeinstellung beinhaltet erfindungsgemäß mindestens eine Zoomvergrößerung und eine Position eines ausgewählten Objektivs.

Erfindungsgemäß sind zum Anpassen des Strahlengangs des Beleuchtungslichts an die wirksame Eintrittspupille des Objektivs Mittel zum variablen Positionieren der Blendenkante entlang der Richtung der optischen Achse vorhanden, wobei eine Position der Blendenkante entlang der Richtung der optischen Achse unabhängig von einer

Position der Blendenkante quer zur optischen Achse variierbar ist. Wesentliche Idee dieser Weiterbildung ist, dass die Blendenkante entlang der Richtung der optischen Achse je nach Lage der wirksamen Eintrittspupille des optischen Systems eingestellt wird.

Bei einer bevorzugten Ausführung der erfindungsgemäßen Vorrichtung sind außerdem Mittel zum Abfragen eines Mikroskoptyps eines Lichtmikroskops, welches an der Vorrichtung zur Durchlichtbeleuchtung positionierbar ist, vorhanden und die Steuereinrichtung ist dazu eingerichtet, abhängig von dem Mikroskoptyp die Blendenkante mit den Mitteln zum variablen Positionieren der Blendenkante in Richtung quer zur optischen Achse zu positionieren.

Hierbei kann die Steuereinrichtung dazu eingerichtet sein, mindestens für die folgenden Mikroskoptypen unterschiedliche Positionseinstellungen der Blendenkante vorzunehmen: Stereomikroskop mit einem auszuleuchtenden Kanal, Stereomikroskop mit zwei auszuleuchtenden Kanälen, Stereomikroskop mit einem auszuleuchtenden Kanal und einem Anregungskanal zur Fluoreszenzanregung, Stereomikroskop mit zwei auszuleuchtenden Kanälen und einem Anregungskanal zur Fluoreszenzanregung sowie Makroskop mit einem auszuleuchtenden Kanal. Die Kanäle stellen getrennte Strahlenverläufe durch mindestens teilweise dieselben optischen Komponenten dar, insbesondere durch das Objektiv und einen Zoomkörper. Für eine optimale Beleuchtung soll jeweils allein der auszuleuchtende Kanal mit dem Beleuchtungslichtbündel ausgeleuchtet werden. Sonstiges Licht trägt hingegen nicht zur Abbildung bei und führt zu Streulicht.

Zur Ausleuchtung eines bestimmten Kanals ist in der Regel eine Einstellung der Blendenkante in einer Richtung quer zur optischen Achse notwendig. Hierzu ist eine Ausführungsvariante der erfindungsgemäßen Vorrichtung zweckmäßig, bei der Mittel zum variablen Positionieren der Blendenkante in einer Richtung quer zur optischen Achse vorhanden sind und die Steuereinrichtung dazu eingerichtet ist, abhängig von Mikroskopeinstellung und/oder Mikroskopkonfiguration die Blendenkante mit den Mitteln zum variablen Positionieren der Blendenkante in einer Richtung quer zur optischen Achse zu positionieren. Die Blendenkante kann demgemäß auch zum Einstellen des Kontrasts in einer Richtung quer zur optischen Achse positioniert werden.

Bei einer bevorzugten Ausführungsvariante der erfindungsgemäßen Vorrichtung weisen die Mittel zum Abfragen eines Mikroskoptyps und/oder die Mittel zum Abfragen einer Mikroskopeinstellung und/oder einer Mikroskopkonfiguration eine elektrische Schnittstelle, insbesondere einen Controller Area Network-Bus (CAN-Bus), auf. Alternativ kann auch eine optische Schnittstelle oder eine Ethernet-Verbindung eingesetzt werden. Es kann entweder dieselbe Schnittstelle sowohl für die Mittel zum Abfragen eines Mikroskoptyps als auch für die Mittel zum Abfragen einer Mikroskopeinstellung und/oder einer Mikroskopkonfiguration verwendet werden oder es können separate Schnittstellen vorgesehen sein.

Für die Blende oder die Blenden kommt es im Prinzip nur auf die technische Wirkung an, dass bestimmte Lichtstrahlen unbeeinträchtigt durch die Blendenkante bleiben, andere Lichtstrahlen dagegen aus dem Lichtstrahl herausgenommen oder ausgeblendet werden. Diese Funktion kann durch eine mechanische Blende, prinzipiell aber auch durch elektronisch ansteuerbare Flüssigkristall-Arrays oder LCD-Arrays verwirklicht werden.

Erfindungsgemäß sind zum Beschneiden des Beleuchtungslichtbündels zwischen der Halteeinrichtung und der Lichtquelle mindestens zwei Blendenkanten vorhanden, welche relativ zueinander bewegbar sind. Die Steuereinrichtung ist dazu eingerichtet, die mindestens zwei Blendenkanten abhängig von Mikroskopeinstellung und/oder Mikroskopkonfiguration zu positionieren. Im Hinblick auf das Reduzieren von Streulicht können hiermit weitere Verbesserungen erzielt werden. Außerdem kann es zweckmäßig sein, für bestimmte Lagen der wirksamen Eintrittspupille eine weitere variabel positionierbare Blende zur Verfügung zu haben.

Eine einfache Herstellung und eine besonders gute Streulichtreduzierung werden erreicht, wenn die Blenden entlang der Richtung der optischen Achse zueinander versetzt sind und die Bewegungsbereiche einander überlappen.

Die Blenden umschließen vorzugsweise eine mittige Öffnungsfläche vollständig. Durch Bewegen der Blenden kann dabei ein Flächenschwerpunkt der Öffnungsfläche quer zur optischen Achse verschoben werden. Dies wird in einfacher Weise bei einer Ausführung der erfindungsgemäßen Vorrichtung mit vier Blenden, welche jeweils eine lineare Blendenkante aufweisen, erreicht. Bei Verwendung von zwei Blenden sind gebogene oder L-förmige Blendenkanten bevorzugt, so dass bereits mit zwei Blenden die Öffnungsfläche zwischen den Blenden vollständig umschlossen werden kann.

Bei einer weiteren bevorzugten Ausgestaltung der erfindungsgemäßen Vorrichtung ist eine der mindestens zwei Blendenkanten durch eine Irisblende gebildet. Weil für viele Mikroskoptypen zumindest ein Teil der auszuleuchtenden Kanäle eine runde Form aufweist, kann durch eine Irisblende in leichter Weise eine gute Anpassung des von der Lichtquelle beleuchteten Bereichs an die auszuleuchtenden Kanäle des Mikroskoptyps erreicht werden.

Für einen Mikroskoptyp mit zwei auszuleuchtenden Kanälen kann eine gute Annäherung durch eine Irisblende und zwei weitere Blenden mit jeweils linearer Blendenkante erfolgen. Die beiden linearen Kanten beschneiden den durch die Irisblende gebildeten Kreis auf gegenüberliegenden Seiten, so dass lediglich der Bereich zwischen den beiden auszuleuchtenden Kanälen unnötig beleuchtet wird.

Bei einer weiteren bevorzugten Ausführungsvariante der erfindungsgemäßen Vorrichtung weist die Steuereinrichtung eine Speichereinrichtung auf, in der Positionseinstellungen der mindestens einen Blendenkante zum Positionieren der mindestens einen Blendenkante abhängig von Mikroskopeinstellung und/oder einer Mikroskopkonfiguration gespeichert sind. Hierfür können in Referenzmessungen mit verschiedenen Mikroskopeinstellungen und/oder Mikroskopkonfigurationen vorteilhafte Positionen bestimmt und abgespeichert worden sein. Die gespeicherte Position wird dann eingenommen, sobald mit den Mitteln zum Abfragen einer Mikroskopkonfiguration und den Mitteln zum Abfragen einer Mikroskopeinstellung eine aktuell verwendete Systemumgebung erkannt worden ist. Die Mikroskopkonfiguration kann dabei den Typ des Zoomkörpers und des im Strahlengang befindlichen Objektivs umfassen. Die Mikroskopeinstellung kann die Zoomstellung des Zoomkörpers sowie die Objektivposition (2D, 3D-Stellung) umfassen.

Bei einer bevorzugten Variante der erfindungsgemäßen Vorrichtung ist ein Bedienelement vorhanden, über das durch einen Benutzer Positionsdaten zu einer eingestellten Position der mindestens einen Blendenkante in der Speichereinrichtung speicherbar und abrufbar sind. Individuell von dem Benutzer eingestellte Positionen können somit vorteilhafterweise gespeichert und später wieder abgerufen werden.

Beleuchtungslicht, das von Orten außerhalb der wirksamen Eintrittspupille in das optische System, also das Mikroskopobjektiv, eintritt, kann dort in der Durchlichthellfeldabbildung nicht zur Abbildung selbst, sondern nur zum Streuuntergrund beitragen. Das ist nicht erwünscht und hieraus ergibt sich eine weitere vorteilhafte Verfahrensvariante, bei der eine Leuchtquelle der Lichtquelle einer tatsächlich wirksamen Rückprojektion des Beleuchtungslichts angepasst wird. Das bedeutet, dass Teile der Leuchtfläche, die kein zur Abbildung beitragendes Beleuchtungslicht liefern können, von vornherein ausgeblendet werden. Hierzu ist bei der erfindungsgemäßen Vorrichtung vorteilhafterweise zum Variieren einer wirksamen Leuchtfläche der Lichtquelle mindestens eine weitere Blende vorhanden, die unmittelbar vor der Lichtquelle positioniert ist.

Ob und in welchem Maß durch eine Schräglichtbeleuchtung Verbesserungen des Kontrasts erzielt werden können, hängt von der jeweils untersuchten Probe ab. In diesem Zusammenhang ist ein weiteres Ausführungsbeispiel der erfindungsgemäßen Vorrichtung von Vorteil, bei welcher Mittel zum Drehen der Blendenkante um die optische Achse vorhanden sind. Das bedeutet, dass die Richtung, in welche die mittlere Strahlrichtung gegenüber der optischen Achse bei einer Schräglichtbeleuchtung verkippt ist, variiert werden kann. Dadurch wird, wenn die erfindungsgemäße Vorrichtung mit einem Makroskop verwendet wird, im Prinzip dasselbe erreicht wie beim Drehen der Probe um die optische Achse. Wesentlicher Vorteil ist hierbei, dass die Probe als solche in der Halteeinrichtung unverändert bleiben kann und demgemäß nicht in ihrer Position verändert werden muss.

Die erzielten Resultate hängen im Hinblick auf Darstellungsqualität, Kontrastierung und Helligkeit der Probe stark insbesondere von der Ortsposition der Blendenkante ab, da durch die Blendenkante die Beleuchtung empfindlich variiert und eingestellt werden kann.

Beispielsweise kann bei einer besonders bevorzugten Ausführungsform der erfindungsgemäßen Vorrichtung zum Verschieben der Blendenkante entlang der Richtung der optischen Achse und in Richtung quer zur optischen Achse eine Schlittenmechanik mit einem ersten Schlitten und einem zweiten Schlitten vorhanden sein. Zum Antrieb dieser Schlitten können Schrittmotoren verwendet werden, mit welchen eine präzise Positionierung möglich ist.

Das erfindungsgemäße Verfahren kann insbesondere mit der erfindungsgemäßen Vorrichtung zur Durchlichtbeleuchtung verwirklicht werden. Hierzu ist bei dem erfindungsgemäßen Mikroskopsystem in einer vorteilhaften Variante eine Steuereinrichtung vorhanden, die mit Bestandteilen des Lichtmikroskops und der Vorrichtung zur Durchlichtbeleuchtung verbunden ist und zum Ansteuern des Mikroskops und der Vorrichtung zur Durchlichtbeleuchtung zur Durchführung eines erfindungsgemäßen Verfahrens eingerichtet ist.

Bei einer besonders bevorzugten Variante des erfindungsgemäßen Verfahrens wird die Blendenkante in einer Ebene einer wirksamen Eintrittspupille des Objektivs positioniert. Insbesondere kann dabei die Blendenkante in der Richtung quer zur optischen Achse so positioniert werden, dass sie die wirksame Eintrittspupille in der Richtung quer zur optischen Achse gerade berührt. Hierdurch wird als vorteilhafte technische Wirkung erreicht, dass ein wesentlicher Teil des Beleuchtungslichts, der ohne die Blende Beiträge zum Streulicht hätte liefern können, nunmehr ausgeblendet ist.

Sodann eröffnet die Positionierung der Blendenkante in der Ebene der Eintrittspupille die Möglichkeit, eine Schräglichtbeleuchtung dadurch zu erreichen, dass die Blendenkante einen Teil der Eintrittspupille abdeckt. Besonders bevorzugt beschneidet die Blendenkante bei diesen Ausführungsvarianten das Beleuchtungslichtbündel asymmetrisch. Das bedeutet, dass bestimmte Strahlen des Beleuchtungslichts herausselektiert werden und im Ergebnis eine Schräglichtbeleuchtung erzielt wird. Hierdurch können in der Praxis vorteilhafte Verbesserungen der Kontrastierung erzielt werden.

Bei einer weiteren bevorzugten Variante des erfindungsgemäßen Verfahrens werden für eine verwendete Mikroskopeinstellung und/oder für eine verwendete Mikroskopkonfiguration einem Benutzer verschiedene Positionseinstellungen der Blendenkante angeboten. Die verschiedenen Positionseinstellungen sind in Hinblick auf je einen Beleuchtungsparameter optimiert, wobei die Beleuchtungsparameter ein Maß sind für einen Intensitätsgradienten eines Mikroskopbilds in einer Richtung quer zur Blendenkante, einen Bildkontrast des Mikroskopbilds, einen Kontrastumfang, eine Bildhomogenität und/oder einen Schattenwurf im Mikroskopbild. Ein Benutzer kann demnach auswählen, ob die Blendenkanten beispielsweise für einen optimalen Bildkontrast des Mikroskopbilds oder für einen minimalen Intensitätsgradienten des Mikroskopbilds positioniert werden sollen.

Die verschiedenen Positionseinstellungen können vorab bestimmt werden, indem zunächst die Position der Blendenkante entlang der Richtung der optischen Achse des Objektivs variiert wird und für jede Position der Blendenkante entlang der Richtung der optischen Achse ein Mikroskopbild mindestens teilweise aufgenommen wird. Sodann wird für jedes Mikroskopbild ein Beleuchtungsparameter bestimmt und als eine optimale Position der Blendenkante wird diejenige Position der Blendenkante entlang der Richtung der optischen Achse festgelegt und gespeichert, bei der ein Verlauf des Beleuchtungsparameters aufgetragen gegen die Position der Blendenkante entlang der Richtung der optischen Achse eine vorbestimmte Charakteristik aufweist. Diese Charakteristik kann dann für jede relevante Zoomstellung des Mikroskops aufgenommen werden. Zwischenbereiche können später interpoliert werden.

Als eine in Hinblick auf einen Intensitätsgradienten optimierte Position kann diejenige Position der Blendenkante festgelegt werden, wo im Mikroskopbild ein Verlauf des Intensitätsgradienten aufgetragen gegen die Position Blendenkante entlang der Richtung der optischen Achse einen Nulldurchgang aufweist.

Bei einem bevorzugten Ausführungsbeispiel des erfindungsgemäßen Mikroskopsystems ist in einem Abbildungsstrahlengang des Lichtmikroskops eine motorisierte Aperturblende zum Einstellen einer Beobachtungsapertur vorhanden und die Steuereinrichtung ist dazu eingerichtet, die Aperturblende abhängig von einer Position der mindestens einen Blendenkante zu positionieren. Die Blendenstellung der motorisierten Aperturblende kann beispielsweise über eine Codierung bestimmbar sein. Für eine Kontrastverbesserung kann die Beobachtungsapertur des Abbildungssystems an die Beleuchtungseinstellungen angepasst und bei Bedarf zusammen mit den Beleuchtungseinstellungen abgespeichert und reproduziert werden.

Bei einer weiteren bevorzugten Variante des erfindungsgemäßen Mikroskopsystems weist das Lichtmikroskop einen kodierten Objektivwechsler auf. Mit diesem wird ausgegeben, welches Objektiv in den Strahlengang des Lichtmikroskops eingeschwenkt ist. In einem Speicher des Mikroskops oder eines externen Computers sind Vergrößerungswerte und Objektivtypen der Objektive des Objektivwechslers gespeichert und können mit den Mitteln zum Abfragen einer Mikroskopeinstellung abgefragt werden.

Weitere Vorteile und Merkmale der erfindungsgemäßen Vorrichtung, des erfindungsgemäßen Verfahrens und des erfindungsgemäßen Mikroskopsystems werden im Folgenden mit Bezug auf die Figuren erläutert: Hierin zeigen:

Fig. 1:          ein Mikroskopsystem nach dem Stand der Technik;

Fig. 2:          eine Skizze zur Erläuterung einer Durchlichteinrichtung nach dem Stand der Technik;

Fig. 3:          eine Übersicht über wesentliche Bestandteile des Strahlengangs bei einer erfindungsgemäßen Vorrichtung in einer Seitenansicht;

Fig. 4:          wesentliche Bestandteile des Strahlengangs bei einer erfindungsgemäßen Vorrichtung in einer Vorderansicht;

Fig. 5:          wesentliche Bestandteile des Strahlengangs bei einer erfindungsgemäßen Vorrichtung in einer Seitenansicht mit einer Blendenkante;

Fig. 6:          eine Tabelle zu idealen Beleuchtungen verschiedener Mikroskoptypen;

Fig. 7:          eine Tabelle mit Blendenformen für die verschiedenen Mikroskoptypen;

Fig. 8:          eine schematische Ansicht von vier Blenden einer erfindungsgemäßen Vorrichtung, die für einen bestimmten Mikroskoptyp eingestellt sind;

Fig. 9:          eine schematische Perspektivansicht von vier Blenden einer erfindungsgemäßen Vorrichtung und

Fig. 10 bis 14:   Zustände einer Ausführungsvariante, bei welcher ein Flüssigkristall-Array als Blende fungiert.

Gleiche und gleichwirkende Komponenten sind in den Figuren in der Regel mit denselben Bezugszeichen versehen. Hingewiesen wird außerdem auf die Bezugszeichenliste am Ende der Beschreibung.

Aus den bekannten Daten von verschiedenen Objektiven OBJ1, OBJ2, OBJ3 lassen sich die abbildungsseitigen Randstrahlen jeweils in Kombination mit einem motorisierten Zoomkörper MZK, abhängig vom Zoomfaktor β, zusammen mit der Rückprojektion dieser abbildungsseitigen Randstrahlen in den Beleuchtungsraum ermitteln und darstellen.

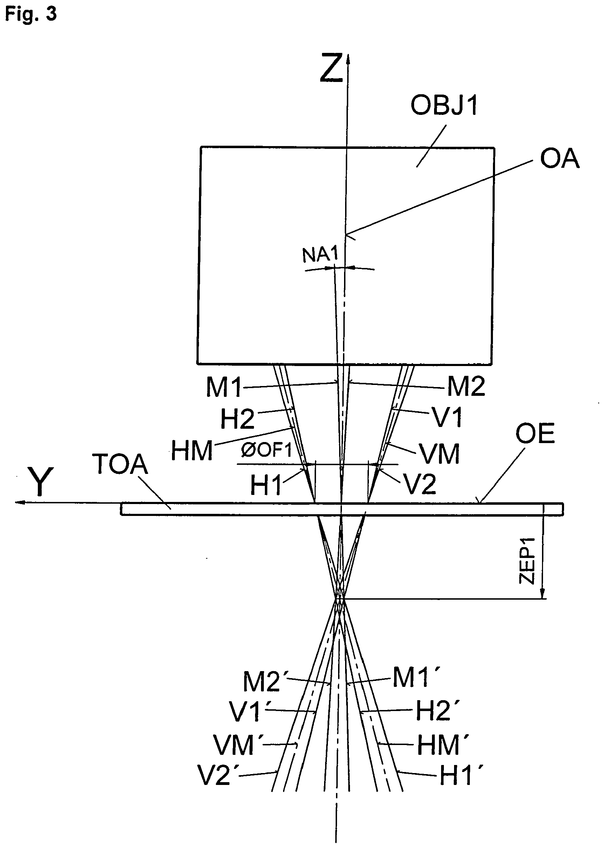

Figur 3 zeigt die Seitenansicht des Strahlengangs mit dem Objektiv OBJ1 aus Figur 1, das zusammen mit dem in Figur 3 nicht dargestellten motorisierten Zoomkörper MZK und dem aktuell wirksamen Zoomfaktor β eine numerische Apertur NA1, einen Objektfelddurchmesser OF1 in der Objektebene OE und eine Z-Koordinate der Eintrittspupille ZEP1 aufweist. Das Koordinatensystem mit den Achsen X, Y, und Z dient der Orientierung.

Ausgehend von der Objektebene OE sind die Grenzlichtstrahlen eingezeichnet, die für die Beschreibung der Abbildung durch das dargestellte Objektiv OBJ1 besonders relevant sind.

Vom hinteren Objektfeldrand gehen die Lichtstrahlen H1 und H2, sowie der mittlere Lichtstrahl HM aus, wobei die Lichtstrahlen H1 und H2 die theoretischen Aperturbegrenzungen des dargestellten Objektivs OBJ1 bei dem gerade wirksamen Zoomfaktor β repräsentieren. Analog hierzu gehen die Lichtstrahlen V1, V2 und VM vom vorderen Objektfeldrand aus, wobei V1 und V2 die theoretischen Aperturbegrenzungen des dargestellten Objektivs OBJ1 bei dem gerade wirksamen Zoomfaktor β kennzeichnen.

In der praktischen Anwendung gibt es in der Regel eine transparente Objektauflage TOA, die aufgrund der Brechzahlunterschiede und Dicke einen Strahlversatz, also eine Verlängerung der tatsächlich wirksamen optischen Abstände erzeugt. Daher müssen sowohl die optische Wirksamkeit der transparenten Objektauflage TOA mit einer Dicke DG und einer Brechzahl nG, als auch die entsprechenden optischen Eigenschaften des Objektes OB mit einer Objekthöhe OH und einer Brechzahl nO berücksichtigt werden. Lokale Krümmungen des Objekts OB und/oder Brechzahlschwankungen, zum Beispiel durch Luftblaseneinschlüsse usw., führen ebenfalls zu einer Änderung des optischen Wegs und sind im Prinzip zu berücksichtigen.

Somit existiert ein Strahlversatz SV in Z-Richtung, der aufgrund der bekannten Eigenschaften von TOA, nämlich Dicke und Brechzahlübergänge und bei Vernachlässigung der Eigenschaften des Objektes OB leicht berechnet werden kann.

In Luft gilt die Formel

$$SV = DG * (nG-1) / nG$$

Bei einer typischen Dicke von zum Beispiel DG=4mm und nG=1.5 ergibt sich hieraus ein Strahlversatz SV = 1,3mm.

Diese Berechnung gilt allerdings nur für eine idealisierte transparente Objektauflage TOA ohne Objekt OB und setzt die bekannten optischen Daten voraus. In der praktischen Anwendung ist das Objekt OB häufig durch weitere Medien umgeben, zum Beispiel Petrischalen mit Nährlösungen usw., und es ist gegebenenfalls selbst optisch inhomogen und/oder mit lokal gekrümmten Oberflächen oder Einschlüssen versehen, so dass die Zusammenhänge noch komplizierter werden. Die oben angegebene Vereinfachung führt zu Fehlern, die in vielen Fällen nicht vernachlässigbar sind. Deshalb lässt sich der Strahlversatz SV meistens nicht korrekt berechnen. Das bedeutet, dass auch Zh1 in der Regel nicht genau bekannt ist und empirisch ermittelt werden muss. Berücksichtigt man dass die Objektauflage TOA eine nicht zu vernachlässigende Dicke DG, das Objekt OB eine optisch wirksame Dicke hat und bei gewöhnlichen Zoommikroskopen die Pupille keine wohldefinierte ebene Fläche ist, ergibt sich eine wirksame Eintrittspupille, deren Abstand von der Objektebene OE Zh1 gegenüber der Z-Koordinate der idealisierten Eintrittspupille ZEP1 verschoben ist.

Statt des in Figur 3 dargestellten Objektivs OBJ1 kann auch eines der Objektive OBJ2 oder OBJ3 aus Figur 1 verwendet werden. Diese weisen zusammen mit dem motorisierten Zoomkörper MZK und dem aktuell wirksamen Zoomfaktor β eine andere numerische Apertur, einen anderen Objektfelddurchmesser in der Objektebene OE und eine andere Z-Koordinate der Eintrittspupille auf. Bedingt durch die in der Stereomikroskopie und Makroskopie typischen kostenoptimierten Objektiv-Zoomkörper-Kombinationen OBJ1 mit MZK, OBJ2 mit MZK und OBJ3 mit MZK gibt es keine auskorrigierten und über den Zoombereich feststehenden Pupillenebenen und keine garantierte Eignung für polarisationsoptische Verfahren. Der Wert von ZEP1 und die entsprechenden Werte ZEP2 und ZEP3 (in Figur 3 nicht dargestellt) der zweiten und dritten Objektiv-Zoomkörper-Kombination OBJ2 mit MZK und OBJ3 mit MZK liegen entsprechend weit auseinander und wandern mit dem Zoomfaktor β in der Regel unterschiedlich stark. Bei Nutzung eines codierten Objektivwechslers COW gemäß Figur 1 kann für verschiedene Objektive OBJ1, OBJ2 und OBJ3 in einem Stereomikroskop-System ein identisches Objekt OB auf einer identischen transparenten Objektauflage TOA vorausgesetzt werden, so dass auch Zh1 und die entsprechenden Werte Zh2 und Zh3 (in Figur 3 nicht dargestellt) der zweiten und dritten Objektiv-Zoomkörper-Kombination OBJ2 mit MZK und OBJ3 mit MZK entsprechende Unterschiede aufweisen.

Außerdem gibt es an den beschriebenen typischen kostengünstigen Objektiv-Zoomkörper-Kombinationen OBJ1 mit MZK, OBJ2 mit MZK und OBJ3 mit MZK keine definierten und beim Zoomen feststehenden Eintrittspupillen. Die Realisierung einer solchen Forderung hätten das Optikdesign und die Objektivkonstruktion deutlich erschwert, was mindestens zu einer Verteuerung der Objektive und einer gegebenenfalls nicht akzeptablen Baugröße geführt hätte, sofern sich überhaupt eine Lösung hierfür finden lässt. Somit gibt es praktisch keine ebenen ortsfesten Eintrittspupillen mit den üblichen minimierten Abbildungsfehlern. Die Eintrittspupillen sind somit stark deformiert und wandern bei Variation des Zoomfaktors β und die Lage der Eintrittspupillen hängt stark von der Lichtwellenlänge ab.

Bei einem durch den rechten Kanal R des Objektivs OBJ1 mit der Anordnung gemäß Figur 3 aufgenommenes Bild ist der Kontrast ohne weitere Mittel sehr schwach, Strukturen und/oder Phasenunterschiede sind so gut wie nicht erkennbar. Das Bild weist dafür eine sehr gute Homogenität hinsichtlich der Helligkeit auf. In einer ersten Ausführungsform wird das Problem durch die Bereitstellung einer entlang der Richtung der optischen Achse des Beobachtungssystems verschiebbaren Blende im Körper der Durchlichthaube gelöst. Diese Blende lässt sich bei verschiedenen Zoomstellungen auf die Position der Eintrittspupille des optischen Systems einstellen. Durch eine Verschiebung senkrecht zur optischen Achse lassen sich verschiedene Kontrasteffekte erreichen.

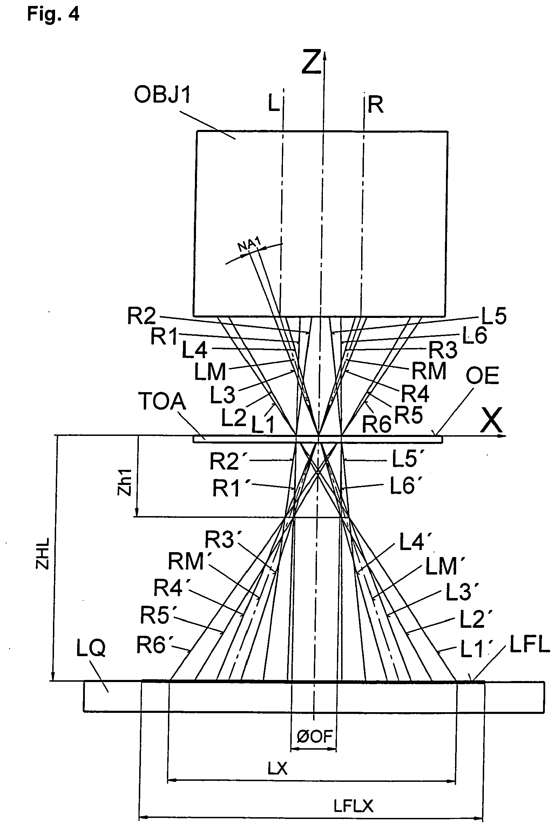

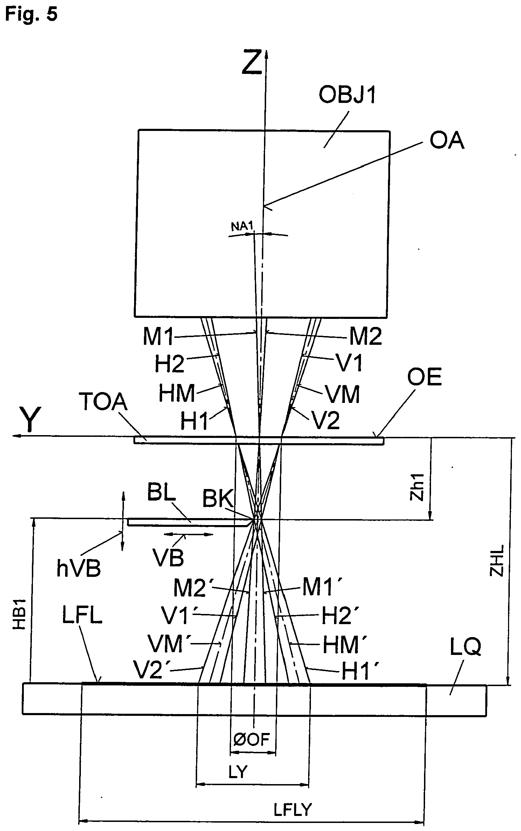

Figur 4 zeigt die Vorderansicht, Figur 5 die Seitenansicht von links einer erfindungsgemäßen Anordnung. Das Koordinatensystem mit den Achsen X, Y, und Z dient der Orientierung. Mit R1 bis R6 sind in Figur 4 rechte Lichtstrahlen und mit L1 bis L6 linke Lichtstrahlen gekennzeichnet.

In Figur 5 sind ausgehend von der Objektebene OE oder von der Oberseite der transparenten Objektauflage TOA die Grenz-Lichtstrahlen eingezeichnet, die für die Beschreibung der Abbildung durch das. dargestellte Objektiv OBJ1 besonders relevant sind.

Vom hinteren Objektfeldrand gehen die Lichtstrahlen H1 und H2, sowie der mittlere Lichtstrahl HM aus, wobei die Lichtstrahlen H1 und H2 die theoretischen Aperturbegrenzungen des dargestellten Objektivs OBJ1 bei dem gerade wirksamen Zoomfaktor β repräsentieren. Mit NA1 ist die Objektivapertur des Objektivs OBJ1 in den Figuren 4 und 5 bezeichnet.

Analog hierzu gehen die Lichtstrahlen V1, V2 und VM vom vorderen Objektfeldrand aus, wobei V1 und V2 die theoretischen Aperturbegrenzungen des dargestellten Objektivs OBJ1 bei dem gerade wirksamen Zoomfaktor β kennzeichnen.

Alle in den Beleuchtungsraum zurückprojizierten Lichtstrahlen behalten ihren Namen. Als Merkmal zur Berücksichtigung des Strahlversatzes SV wird jeweils nur ein Hochkomma ergänzt. Aus den mittleren Lichtstrahlen im Abbildungsraum VM und HM resultieren bei Berücksichtigung des Strahlversatzes durch die transparenten Objektauflage TOA somit die in den Beleuchtungsraum zurückprojizierten Lichtstrahlen VM' und HM'. Mit M1 und M2 sind in Figur 5 mittlere Lichtstrahlen bezeichnet.

Erfindungsgemäß ist eine verstellbare Blende BL mit einer Blendenkante BK im Bauraum zwischen der Objektebene OE oder der Oberseite der transparenten Objektauflage TOA und der Leuchtfläche LFL einer Lichtquelle LQ angeordnet. Diese Blende BL lässt sich in der Höhe, das heißt entlang der Verschieberichtung hVB, so einstellen, dass die Blendenkante BK in einer idealen Z-Blendenlage Zh1 für das aktuell aktive Objektiv OBJ1 in Kombination mit einem Zoomkörper MZK, an dem ein aktueller Zoomfaktor β eingestellt ist, liegt. In Figur 5 ist erkennbar, dass diese Einstellung bereits erfolgt ist, wobei dies nur eine idealisierte Darstellung zur Verdeutlichung des Prinzips ist.

Wie bereits ausgeführt, sind die Eintrittspupillen der meisten Objektive an Zoomsystemen hauptsächlich aus Kostengründen nicht ortsfest und unterliegen keinen speziellen Qualitätsvorgaben. Dies führt dazu, dass die Lage und Form der Eintrittspupille dann nicht klar definiert ist, sie ist zum Teil auch stark abhängig von der Lichtwellenlänge. Der reale Strahlengang ist also deutlich komplexer und entsprechend kompliziert darzustellen. Zur Beschreibung der prinzipiellen Wirkungsweise wird daher nur der idealisierte Strahlengang verwendet.

Wegen der oben erläuterten komplexen Verhältnisse und weiterer unbekannten Einflüssen des Objektes OB und seiner Umgebung, wie zum Bespiel die transparente Objektauflage TOA, Petrischale mit Nährlösung, sind praktische Versuche zur Ermittlung und/oder Einstellung der idealen Z-Blendenlage Zh1 unerlässlich. Hauptsächlich wegen der unbekannten Einflüsse des Objektes OB und seiner Umgebung wird vorzugsweise ein geeignetes Bedienelement, zum Beispiel ein Adjust-Scrollrad SADJ, zur kundenseitigen Variation der Blendenlage senkrecht zur Objektebene OE vorgesehen.

Die ideale Blendenlage ist dadurch gekennzeichnet, dass mindestens eine Blende BL mit mindestens einer linear verlaufenden Blendenkante BK zwischen der Lichtquelle LQ und der Objektebene OE parallel zur Flächennormalen der Objektebene OE in der Richtung hVB und in mindestens einer hierzu senkrecht angeordneten Richtung VB frei positionierbar ist, so dass die Blende BL mit Blendenkante BK durch die Bewegung in Richtung hVB der Flächennormalen der Objektebene OE zur Homogenisierung der Beleuchtung in eine ideale Blendenposition Zh1 gebracht werden kann, in der sie optimal an das aktuell wirksame Abbildungssystem angepasst werden kann. Das Abbildungssystem umfasst einen Zoomkörper MZK mit dem aktuellen Zoomfaktor β ein Objektiv OBJ1, ein Objekt OB und gegebenenfalls eine transparente Objektauflage TOA, was durch eine hinreichend homogene Ausleuchtung erkennbar ist. Die Kontraststärke lässt sich durch das Verschieben der Blende BL mit Blendenkante BK senkrecht zur Flächennormalen der Objektebene OE in Richtung VB einstellen, wobei die Blendenkante BK parallel zur Objektebene OE und senkrecht zur Verschieberichtung VB für die Kontraststärkevariation orientiert ist. Prinzipiell sind keine weiteren Mittel zur Homogenisierung der Beleuchtung vorgesehen oder erforderlich.

Bei eingestellter idealer Z-Blendenlage Zh1 ist der Abstand zwischen der Leuchtfläche LFL und der Blende BL dann HB1, der Abstand ZHL ergibt sich gemäß Figur 5 aus ZHL = Zh1 - HB1.

In den Figuren 4 und 5 ist erkennbar, dass die Leuchtfläche LFL der Lichtquelle LQ eine Ausdehnung LFLX in X-Richtung und LFLY in Y-Richtung hat. Für eine vignettierungsfreie homogene Abbildung über das dargestellte Objektiv OBJ1 bei dem gerade wirksamen Zoomfaktor β werden aber nur die Leuchtflächenausdehnungen LX in X-Richtung und LY in Y-Richtung benötigt.

Idealerweise werden die Leuchtfeldabmaße LFLX und LFLY mindestens so groß gewählt, dass für jedes vorhandene Objektiv unter allen vorkommenden Abbildungsbedingungen eine vignettierungsfreie homogene Ausleuchtung möglich ist. Die Form der Leuchtfläche kann hierbei auch an die tatsächlich wirksame Rückprojektion der Lichtstrahlen angepasst werden, dann ergibt sich näherungsweise eine Ellipse mit großer Halbachse in der X-Richtung bei 3D-Beobachtung oder ein Kreis bei 2D-Beobachtung. Mit 2D-Beobachtung ist hierbei die einkanalige Beobachtung der Probe gemeint, mit 3D-Beobachtung entsprechend die Beobachtung mit zwei Kanälen.

Durch die Bewegung der im Abstand Zh1 von der Objektebene OE oder von der Oberseite der transparenten Objektauflage TOA positionierten Blende BL in der Verschieberichtung VB lässt sich die Blende BL mit der Blendenkante BK so in den Beleuchtungsstrahlengang bringen, dass bestimmte Lichtstrahlen ausgeblendet werden können. Die Blende wird vorzugsweise entlang der Y-Achse bewegt, da sie dann für den linken Kanal L und den rechten Kanal R gleichmäßig wirkt. In Figur 4 ist erkennbar, dass eine Bewegung der (nicht dargestellten) Blende im Abstand Zh1 in der X-Richtung nicht die Lichtstrahlen beider Kanäle gleichmäßig ausblenden würde, die Folge wäre eine für 3D-Abbildungen ungeeignete Ausleuchtung. Wird die Blende BL mit der Blendenkante BK gemäß Figur 5, das heißt durch Bewegung im Abstand Zh1 von der Objektebene OE oder von der Oberseite der transparenten Objektauflage TOA in der Verschieberichtung VB, in den Beleuchtungsstrahlengang gebracht, wirkt sie nicht nur auf beide Kanäle gleichmäßig, sondern auch auf alle Punkte des Objektfelds.

Gemäß der Anordnung der Blende BL in Figur 5 berührt die Blendenkante BK die rückprojizierten Lichtstrahlen V2' und H2', die von gegenüberliegenden Objektfeldrändern ausgehen. Somit werden auch alle rückprojizierten Lichtstrahlen zwischen den gegenüberliegenden Objektfeldrändern von der Blendenkante BK berührt. Wird die Blende BL weiter in den Beleuchtungsstrahlengang eingeschoben, resultiert daraus eine gleichmäßige Abdeckung von beleuchtenden Lichtstrahlen über das Objektfeld, das heißt die Beleuchtung bleibt bei abnehmender Helligkeit homogen, wobei der Kontrast deutlich zunimmt. Dies wurde durch praktische Versuche bestätigt.

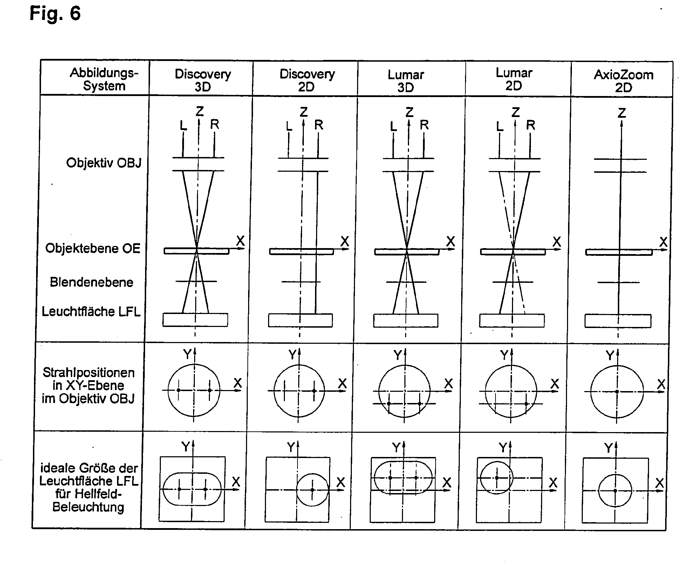

Figur 6 zeigt eine tabellarische Übersicht über verschiedene Abbildungssysteme mit Strahlengängen, den Strahlpositionen in der Eintrittsebene des Objektivs sowie Strahlpositionen und Strahlabmessungen in einer Ebene der Leuchtfläche. Die Mikroskoptypen unterscheiden sich durch ihre Abbildungssysteme, welche bezüglich der Objektive unterschiedlich angeordnete Beobachtungskanäle haben.

Mit speziellen Objektivwechslern können bei den stereoskopischen Beobachtungssystemen die Objektive so eingestellt werden, dass zwischen 3D-Beobachtung und 2D-Beobachtung gewechselt werden kann.

In der ersten Zeile der Tabelle sind verschiedene Abbildungssysteme, nämlich Discovery 3D, Discovery 2D, Lumar 3D, Lumar 2D und AxioZoom 2D, angegeben. Dabei bezeichnet Discovery 3D ein Stereomikroskop mit einem linken Kanal L und einem rechten Kanal R, wobei beide Kanäle L, R benutzt und ausgeleuchtet werden müssen.

Discovery 2D bezeichnet ein Stereomikroskop mit einem linken Kanal L und einem rechten Kanal R, wobei das Objektiv vor den rechten Kanal R gebracht wird, so dass nur der rechte Kanal R auszuleuchten ist.

Unter Lumar 3D soll ein Fluoreszenz-Stereomikroskop mit einem linken Kanal L und einem rechten Kanal R verstanden werden, wobei beide Kanäle L, R gegenüber der Objektmitte nach vorn versetzt sind, damit ein dritter, nicht dargestellter Kanal zur Fluoreszenzanregung ebenfalls das Objektiv durchstrahlen kann. Hier sind also beide Kanäle L und R auszuleuchten.

Mit Lumar 2D wird ein Fluoreszenz-Stereomikroskop mit einem linken Kanal L und einem rechten Kanal R bezeichnet, bei dem ebenfalls beide Kanäle gegenüber der Objektmitte nach vorn versetzt sind, so dass ein dritter, nicht dargestellter Kanal zur Fluoreszenzanregung das Objektiv durchstrahlen kann. Dabei wird allerdings nur der rechte Kanal zur Beobachtung benutzt. Das heißt, nur der rechte Kanal R ist auszuleuchten.

Schließlich bezeichnet AxioZoom 2D ein Makroskop mit einem Kanal, das heißt nur dieser eine Kanal ist auszuleuchten.

Die Spalten zwei bis sechs der Tabelle in Figur 6 geben die oben genannten Abbildungssysteme an. Die erste Spalte gibt Auskunft über den Tabelleninhalt zu den verschiedenen Abbildungssystemen.

In der zweiten Zeile sind die Vorderansichten mit dem prinzipiellen Strahlengang zu den Abbildungssystemen erkennbar, wobei nur die Hauptstrahlen eingetragen sind. Zur Orientierung dient ein XYZ-Koordinatensystem. Die Lichtstrahlen gehen von einer Leuchtfläche LFL aus und durchlaufen eine Blendenebene, eine Objektebene OE, an welcher sich eine zu untersuchende Probe befinden kann, und ein Objektiv OBJ. Dieses ist durch zwei symbolische Hauptebenen angedeutet.

In der dritten Zeile sind die Draufsichten, also von oben durch das Objektiv OBJ gesehen, mit den prinzipiellen Strahlengängen zu den Abbildungssystemen gezeigt. Dargestellt sind nur die abbildungsseitig genutzten Hauptstrahlen. Diese sind als fette Kreise abgebildet und stellen Beleuchtungsschwerpunkte dar. In dieser Zeile sind die Lagen der abbildungsseitigen Hauptstrahlen in der XY-Ebene verdeutlicht. Für die Abbildungssysteme Discovery 3D, Discovery 2D und AxioZoom 2D liegen die Beleuchtungsschwerpunkte auf der X-Achse. Hingegen sind für die Abbildungssysteme Lumar 3D und Lumar 2D die Beleuchtungsschwerpunkte nach vorne versetzt und liegen somit nicht auf der X-Achse. Zudem ist erkennbar, dass die Abbildungssysteme, bei denen zwei Kanäle auszuleuchten sind, also Discovery 3D und Lumar 3D, zwei Beleuchtungsschwerpunkte aufweisen, während die übrigen Abbildungssysteme mit bloß einem auszuleuchtenden Kanal nur einen Beleuchtungsschwerpunkt haben.

In der untersten Zeile sind die Draufsichten, das heißt von oben direkt auf die Leuchtfläche LFL gesehen, mit der prinzipiell erforderlichen Leuchtfläche LFL zur vollständigen Ausleuchtung für die entsprechenden Abbildungssysteme gezeigt. Die genutzten Hauptstrahlen als Beleuchtungsschwerpunkte sind durch fette Kreise dargestellt. Die Einkreisungen um diese Hauptstrahlen kennzeichnen die wirksamen Anteile der Leuchtfläche. Erfindungsgemäß soll die Leuchtfläche LFL außerhalb der Einkreisungen durch Blenden abgedeckt werden. Dadurch wird das Eintreten von Streulicht in das Objektiv OBJ reduziert und der Kontrast wird verbessert. Die Einkreisungen um die Hauptstrahlen können durch eine Rückprojektion der Abbildungsrandstrahlen analog zu den Figuren 3 bis 5 ermittelt werden.

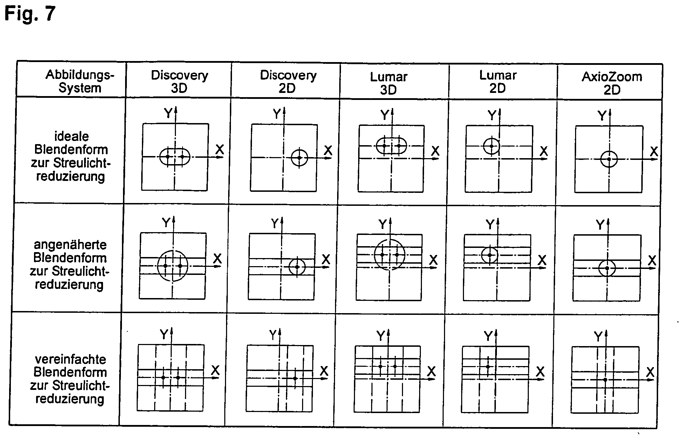

In Figur 7 ist eine Tabelle mit verschiedenen Blendenformen gezeigt, die für die zuvor beschriebenen Abbildungssysteme geeignet sind.

Die dargestellten Blendenformen können erfindungsgemäß mit einer oder vorzugsweise mehreren Blenden realisiert werden. Zum Reduzieren von unerwünschtem Streulicht werden die Blenden in der Blendenebene, die in der zweiten Zeile von Figur 6 gezeigt ist, angeordnet.

In der zweiten Zeile der Tabelle von Figur 7 sind Draufsichten, also Ansichten von oben auf die Blendenebene, mit dem prinzipiellen Strahlengang zu den Abbildungssystemen gezeigt. Der Strahlengang wird durch die fetten Kreise verdeutlicht. Zudem ist die jeweils ideale Blendenform zur Streulichtreduzierung dargestellt. Diese idealen Blendenformen sind unter anderem von der idealen Größe der Leuchtfläche LFL aus Figur 6 abhängig.

In der dritten Zeile der Tabelle von Figur 7 sind die Draufsichten mit dem prinzipiellen Strahlengang zu den Abbildungssystemen dargestellt. Dabei ist jeweils eine angenäherte Blendenform zur Streulichtreduzierung gezeigt. Diese Blendenformen lassen sich erfindungsgemäß durch eine Kombination einer Irisblende mit zwei Blenden, welche jeweils eine linear verlaufende Blendenkante aufweisen, realisieren. Die Irisblende und die beiden Blenden mit linearer Blendenkante können in der XY-Ebene unabhängig voneinander verschoben werden. Die beiden linearen Blendenkanten verlaufen bevorzugt parallel zu einer Verbindungsrichtung der beiden auszuleuchtenden Kanäle L und R. Hiermit kann die ideale Blendenform aus der zweiten Zeile sehr gut angenähert werden.

In der vierten Zeile der Tabelle von Figur 7 sind wiederum die Draufsichten mit dem prinzipiellen Strahlengang zu den Abbildungssystemen gezeigt. Hier ist eine weiter vereinfachte Blendenform zur Streulichtreduzierung dargestellt. Diese Blendenformen lassen sich erfindungsgemäß durch eine Kombination von vier Blenden mit jeweils einer linear verlaufenden Blendenkante realisieren. Diese vier Blenden sind wiederum in der XY-Ebene unabhängig voneinander verschiebbar.

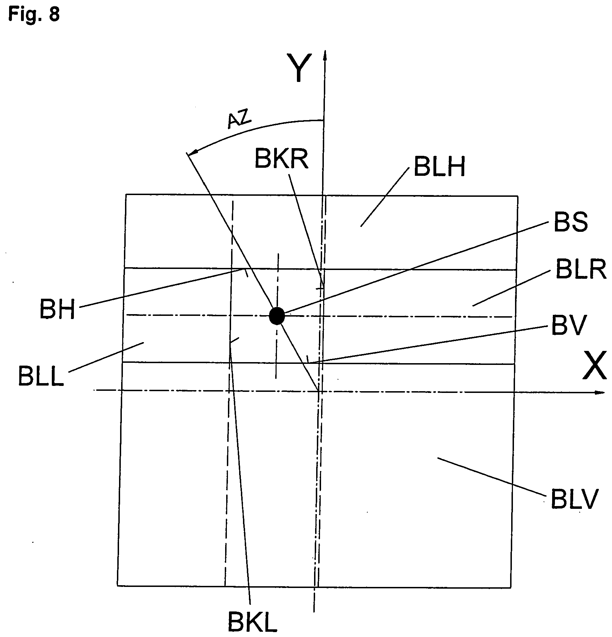

In Figur 8 sind schematisch vier Blenden einer erfindungsgemäßen Vorrichtung gezeigt. Die Positionierung der Blenden ist an das Abbildungssystem Lumar 2D angepasst, das heißt, die vereinfachte Blendenform aus der untersten Zeile, fünfte Spalte aus Figur 7 ist eingestellt.

Die vier Blenden umfassen eine linke Blende BLL mit einer linearen Blendenkante BKL, eine rechte Blende BLR mit einer linearen Blendenkante BKR, eine vordere Blende BLV mit einer linearen Blendenkante BV und eine hintere Blende BLH mit einer linearen Blendenkante BH. Zwischen diesen wird ein Rechteck freigelassen, in welchem der Beleuchtungsschwerpunkt BS liegt. Dieser ist gegenüber der positiven Halbachse des XYZ-Koordinatensystems in einem Azimutwinkel AZ angeordnet.

Durch Verschieben der vier Blenden in der XY-Ebene können auch die übrigen Blendenformen aus der untersten Zeile der Tabelle von Figur 7 eingestellt werden.

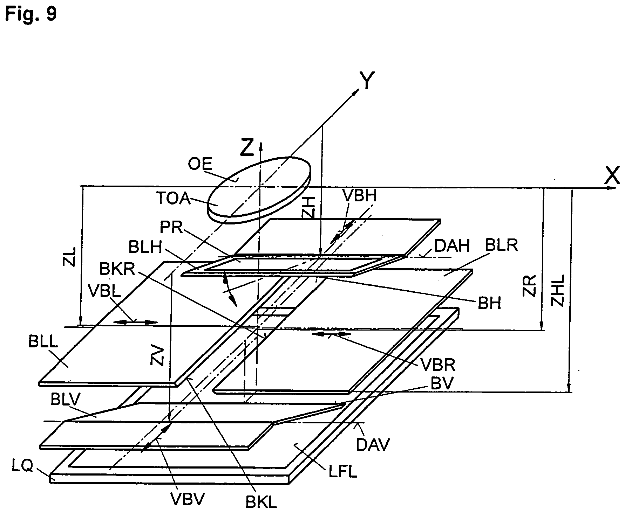

Figur 9 zeigt eine schematische Perspektivdarstellung von vier Blenden BLL, BLR, BLV und BLH einer erfindungsgemäßen Vorrichtung. Unterhalb der Blenden ist eine Lichtquelle LQ mit einer Leuchtfläche LFL vorhanden. Oberhalb der Blenden befindet sich die transparente Objektauflage TOA, welche die Objektebene OE darstellt.

Die Blenden BLL, BLR, BLV und BLH weisen je eine lineare Blendenkante BKL, BKR, BV und BH auf, so dass die vereinfachten Blendenformen aus der vierten Zeile der Tabelle von Figur 7 eingestellt werden können. BKL bezeichnet dabei die linke Blendenkante und BKR entsprechend die rechte Blendenkante. In der abgebildeten Positionierung der vier Blenden ist die Blendenform an das Abbildungssystem Lumar 2D angepasst. Wie in der vierten Spalte in Figur 7 dargestellt ist, wird für das Abbildungssystem AxioZoom 2D ein Freiraum zwischen den vier Blenden eingestellt, welcher quadratisch ist und auf welchem der Beleuchtungsschwerpunkt BS liegt.

Um Größe und Position des Freiraums zwischen den vier Blenden für das jeweilige Abbildungssystem einstellen zu können, sind die Blenden in der XY-Ebene verschiebbar.

Erfindungsgemäß sind die Blenden bevorzugt nicht nur in der XY-Ebene zur Reduzierung des Streulichts einstellbar, sondern auch in der Z-Richtung verstellbar. Hierdurch können die vorstehend genannten Vorteile erreicht werden.

Bedeutsam sind in Figur 9 außerdem folgende Bezugsziffern: VBH: Verschieberichtung der hinteren Blende; VBL: Verschieberichtung der linken Blende; VBR: Verschieberichtung der rechten Blende sowie VBV, welches eine Verschieberichtung der vorderen Blende bezeichnet. ZH bezeichnet in Figur 9 die Z-Koordinate der hinteren Drehachse DAH. Mit ZL beziehungsweise ZR sind in Figur 9 die Z-Koordinaten der linken beziehungsweise der rechten Blendenkante gekennzeichnet. ZV schließlich bezeichnet die Z-Koordinate der vorderen Drehachse DAV. Erfindungsgemäß kann vorgesehen sein, dass abhängig vom eingestellten Abbildungssystem automatisch eine vordefinierte Blendenform eingestellt wird. Bei einem Wechsel von 2D- zu 3D-Beobachtung ändert sich beispielsweise die Blendenform ohne weiteres Zutun eines Benutzers. Die vordefinierten Blendenformen sind dabei durch die jeweiligen Positionen der verfügbaren Blenden festgelegt.

Erfindungsgemäß kann ein Kontrastmodus "Azimut" auswählbar sein. In diesem ist die Form einer Öffnung zwischen den Blenden fest, aber die XY-Position der Öffnung kann verändert werden. Hiermit sind verschiedene Kontraste bei der Beobachtung möglich.

Die Blenden müssen erfindungsgemäß nicht in derselben Z-Ebene liegen. Im dargestellten Beispiel sind die vier Blenden in Z-Richtung zueinander versetzt. Die Blendenkante BV der untersten Blende BLV und die Blendenkante BH der obersten Blende BLH sind zudem höhenverstellbar. Hierzu können diese um eine vordere Drehachse DAV beziehungsweise eine hintere Drehachse DAH gedreht werden. Für die rechte und linke Blende ist keine Höhenverstellung vorgesehen.

Die kostengünstigste Idealform ist eine lineare Blendenkante BK, da sie sich ohne größeren Aufwand leicht herstellen lässt. Leicht gekrümmte Blendenkanten BK lassen sich prinzipiell auch einsetzen, allerdings verändern sich dann mit der Kippung der Blende BL bei feststehender XYZ-Koordinate eines einzelnen Punktes auf der Blendenkante BK mit zunehmender Entfernung von diesem Punkt entlang der Blendenkante BK auch die Y- und die Z-Werte, was praktisch schlecht beherrschbar ist. Krümmungen der Blendenkante BK, die im Bereich der üblichen Fertigungstoleranzen liegen und/oder die noch nicht zu sichtbaren Inhomogenitäten führen, spielen hierbei keine Rolle.

Weiterhin ist es möglich, ein pixelweise schaltbares Array wie zum Beispiel ein LCD-Array als höhenverstellbare Blende zu verwenden. Diese Ausführung hat den Vorteil, dass sich das Transmissionsmuster der Blende an die Pupillenform anpassen lässt. Darüber hinaus sind auch andere Muster vorteilhaft. Die Umkehr der Blendenkante, also ein Umschalten auf eine um 180° versetzte oder verdrehte Blendenkante, ist dann beispielsweise durch elektronische Ansteuerung zu realisieren. Auch eine Rotation der Blende ist möglich. Nicht zuletzt ist auch ein schneller Wechsel des Transmissionsmusters zu verschiedenen Formen hin möglich, die oberhalb der Flimmerfrequenz des Auges, ca. 50 Hz, einen gemischten Kontrasteffekt hervorrufen.

In den Figuren 10 bis 14 sind schematisch Zustände eines als Blende einzusetzenden Flüssigkristall-Arrays 20 dargestellt.

Figur 10 zeigt eine Situation, in welcher alle Pixel des Flüssigkristall-Arrays 20 auf undurchlässig gestellt sind. In Figur 11 ist ein zentraler Bereich 22 des Flüssigkristall-Arrays 20 transparent. Hiermit kann eine runde Blendenform angenähert werden. In Figur 12 ist eine Situation mit zwei transparenten Bereichen 24 dargestellt. Dies ist für einen Mikroskoptyp mit zwei deutlich voneinander getrennten Kanälen geeignet. Die Figuren 13 und 14 schließlich zeigen Fälle, in welchen jeweils eine Hälfte des Flüssigkristall-Arrays 20 auf undurchlässig und die andere Hälfte auf transparent gestellt ist. Dadurch werden Blendenkanten 26, 28 gebildet, die für die erfindungsgemäße Vorrichtung und das erfindungsgemäße Verfahren nutzbar sind. Mit dem Flüssigkristall-Array 20 können vorteilhafterweise sehr gute Annäherungen an die idealen Blendenformen, die in der Tabelle aus Fig. 7 dargestellt sind, erreicht werden.

Ohne Beschränkung kann die Erfindung dadurch verallgemeinert werden, dass beispielsweise der Strahlengang in der Durchlichthaube durch Umlenkoptiken wie Spiegel gefaltet ist und Linsen als Relay-Optiken verwendet werden.

Mit der vorliegenden Erfindung werden ein kostengünstiges Durchlicht-Beleuchtungsverfahren sowie eine Vorrichtung zur Durchlichtbeleuchtung bereitgestellt, die besonders zur Ausleuchtung von kontrastarmen Durchlichtobjekten in den kleineren Übersichtsvergrößerungen im Hellfeld an Stereomikroskopen und Makroskopen geeignet sind.

Das Verfahren liefert in einem sehr großen Sehfeldbereich eine homogene Ausleuchtung. Weiterhin wird das Auflösungsvermögen nicht unnötig eingeschränkt und es werden ausreichende Beleuchtungsintensitäten zur Verfügung gestellt. Ein wesentlicher Vorteil ist außerdem, dass die erfindungsgemäße Vorrichtung in einer üblichen Bauhöhe HER, siehe Fig. 1, von Durchlichteinrichtungen ohne sichtbare Störungen einsetzbar ist. Insbesondere ist das erfindungsgemäße Verfahren auch mit anderen Beleuchtungsverfahren kombinierbar, so dass prinzipiell alle Beleuchtungsverfahren in einer einzigen Durchlichteinrichtung anwendbar sind.

Sodann sind günstige oder optimale Beleuchtungseinstellungen auch für ungeübte Benutzer leicht einstell- und reproduzierbar.

Schließlich eignet sich das Verfahren insbesondere für kostengünstige Objektiv-Zoomkörper-Kombinationen, die keine auskorrigierten und über den Zoombereich feststehenden Pupillenebenen besitzen und nicht zwingend für polarisationsoptische Verfahren nutzbar sein müssen.

Bezugszeichenliste

| AZ | Azimutwinkel der Beleuchtung |
| α | Einstellwinkel des Umlenkspiegels SP |
| ASPH | Asphärische Beleuchtungsoptik |

| β | aktuell wirksamer Zoomfaktor des Zoomkörpers |
| BE | Bedieneinheit für das Gesamtsystem |
| BH | Blendenkante hinten |
| BK | Blendenkante |
| BKL | Blendenkante links |
| BKR | Blendenkante rechts |
| BL | Blende |
| BLH | Hintere Blende |
| BLL | Blende links |
| BLR | Blende rechts |
| BLV | Vordere Blende |
| BMAB | Bedienelement für motorisierte Aperturblende MAB |
| BMFT | Bedieneinheit für die motorisierte Fokussiereinrichtung |
| BMZK | Bedieneinheit für den motorisierten Zoomkörper |
| BS | Beleuchtungsschwerpunkt |
| BV | Blendenkante vorne |
| COW | Codierter Objektivwechsler |
| DA | Drehachse |
| DAH | Drehachse hintere Blende |
| DAV | Drehachse vordere Blende |
| DL | Durchlichteinrichtung |
| E | Ebene in Höhe der Objektauflage auf der Durchlichteinrichtung; diese Ebene wird in der Regel durch die Oberseite der Durchlichteinrichtung gebildet |
| EM | Elektronikmodul zur Steuerung des Gesamtsystems (Signalverarbeitung etc.) |
| FF | Frontfläche des Lichtleiters LL |
| H1 | Hinterer Lichtstrahl 1 |
| H1' | Hinterer Lichtstrahl 1 mit Strahlversatz durch transparente Objektauflage TOA beziehungsweise Glasplatte |
| H2 | Hinterer Lichtstrahl 2 |
| H2' | Hinterer Lichtstrahl 2 mit Strahlversatz durch transparente Objektauflage TOA beziehungsweise Glasplatte |
| HB1 | Höhenabstand von der Leuchtfläche LFL zur Blende BL in der idealen Z-Blendenlage für das Objektiv OBJ1 am Zoomkörper MZK mit dem aktuellen Zoomfaktor β |
| HER | Ergonomisch vertretbare Bauhöhe der Durchlichteinrichtung DL |
| HM | Hinterer Mittenlichtstrahl |
| HM' | Hinterer Mittenlichtstrahl mit Strahlversatz durch transparente Objektauflage TOA beziehungsweise Glasplatte |
| hVB | Verschieberichtung zur Anpassung der Blendenkante an die ideale Z-Blendenlage |
| K | Kamera zur Dokumentation |
| KLD | Kaltlichtquelle zur Lichtversorgung der Durchlichteinrichtung DL |
| L | Linker Abbildungskanal |
| L1 | Linker Lichtstrahl 1 |
| L1' | Linker Lichtstrahl 1 mit Strahlversatz durch |

| | |
|---|---|
| | transparente Objektauflage TOA beziehungsweise Glasplatte |
| L2 | Linker Lichtstrahl 2 |
| L2' | Linker Lichtstrahl 2 mit Strahlversatz durch transparente Objektauflage TOA beziehungsweise Glasplatte |
| L3 | Linker Lichtstrahl 3 |
| L3' | Linker Lichtstrahl 3 mit Strahlversatz durch transparente Objektauflage TOA beziehungsweise Glasplatte |
| L4 | Linker Lichtstrahl 4 |
| L4' | Linker Lichtstrahl 4 mit Strahlversatz durch transparente Objektauflage TOA beziehungsweise Glasplatte |
| L5 | Linker Lichtstrahl 5 |
| L5' | Linker Lichtstrahl 5 mit Strahlversatz durch transparente Objektauflage TOA beziehungsweise Glasplatte |
| L6 | Linker Lichtstrahl 6 |
| L6' | Linker Lichtstrahl 6 mit Strahlversatz durch transparente Objektauflage TOA beziehungsweise Glasplatte |
| LFL | Leuchtfläche der Lichtquelle LQ |
| LFLX | Ausdehnung der Leuchtfläche LFL in X-Richtung |
| LFLY | Ausdehnung der Leuchtfläche LFL in Y-Richtung |
| LL | Lichtleiter |
| LM | Linker Mittenlichtstrahl |
| LM' | Linker Mittenlichtstrahl mit Strahlversatz durch transparente Objektauflage TOA beziehungsweise Glasplatte |
| LQ | Lichtquelle |
| LX | Leuchtflächenausdehnung in der X-Richtung für Berücksichtigung der Objektivrandstrahlen |
| LY | Leuchtflächenausdehnung in der Y-Richtung für Berücksichtigung der Objektivrandstrahlen |
| M1 | Mittlerer Lichtstrahl 1 |
| M1' | Mittlerer Lichtstrahl 1 mit Strahlversatz durch transparente Objektauflage TOA beziehungsweise Glasplatte |
| M2 | Mittlerer Lichtstrahl 2 |
| M2' | Mittlerer Lichtstrahl 2 mit Strahlversatz durch transparente Objektauflage TOA beziehungsweise Glasplatte |
| MAB | Motorisierte Aperturblende |
| MFT | Motorisierte Fokussiereinrichtung |
| MZK | Motorisierter Zoomkörper |
| NA | Numerische Apertur |
| NA1 | Numerische Apertur von Objektiv Nr. 1 |
| OA | Optische Achse des Objektivs |
| OBJ | Objektiv |
| OBJ1 | Objektiv Nr. 1 |
| OBJ2 | Objektiv Nr. 2 mit weit von OE entfernter EP |
| OBJ3 | Objektiv Nr. 3 |
| OE | Objektebene (ohne Objekt identisch mit der Objektauflage) |
| OH | Höhe des Objektes OB incl. des Umgebungs- |

| | |
|---|---|
| | mediums (z.B. Petrischale mit Nährlösung) von der Objektauflage, beziehungsweise von der Oberseite der transparenten Objektauflage TOA, bis zur Objektebene OE |
| OK | Okular |
| RH | Hinterer Randstrahl zwischen Leuchtfläche und Objektiv |
| RL | Ringleuchte RL, die im Tisch optional montierbar ist |
| RM | Rechter Mittenlichtstrahl |
| RM' | Rechter Mittenlichtstrahl mit Strahlversatz durch transparente Objektauflage TOA beziehungsweise Glasplatte |
| RV | Vorderer Randstrahl zwischen Leuchtfläche und Objektiv |
| SO | Öffnungsabstand vom blendenseitigen Randstrahl der zurückprojizierten Abbildungsstrahlen zur optischen Achse OA, der durch die um den Verschiebeweg OOE zur Objektebene OE hinzeigend verschobenen Blende BL abgedeckt wird |
| SP | Umlenkspiegel |
| SR1 | Bedienelement 1 in der Durchlichteinrichtung DL |
| SR2 | Bedienelement 2 in der Durchlichteinrichtung DL |
| SR3 | Bedienelement 3 in der Durchlichteinrichtung DL |
| ST1 | Lichtstrahl 1 |
| ST2 | Lichtstrahl 2 |
| ST3 | Lichtstrahl 3 |
| ST4 | Lichtstrahl 4 |
| ST5 | Lichtstrahl 5 |
| SV | Strahlversatz |
| T | Tubus |
| TOA | Transparente Objektauflage |
| TR | Träger |
| V1 | Vorderer Lichtstrahl 1 |
| V1' | Vorderer Lichtstrahl 1 mit Strahlversatz durch transparente Objektauflage TOA beziehungsweise Glasplatte |
| V2 | Vorderer Lichtstrahl 2 |
| V2' | Vorderer Lichtstrahl 2 mit Strahlversatz durch transparente Objektauflage TOA beziehungsweise Glasplatte |
| VB | Verschieberichtung der Blende BL zur Variation des Kontrastes |
| VBH | Verschieberichtung der hinteren Blende zur Variation des Kontrastes |
| VBHH | Verschieberichtung der Hebelverstellung für die hintere Blende |
| VBL | Verschieberichtung der linken Blende |
| VBLH | Verschieberichtung der hinteren Blende parallel zur Leuchtfläche LFL |
| VBLV | Verschieberichtung der vorderen Blende parallel zur Leuchtfläche LFL |
| VBR | Verschieberichtung der rechten Blende |
| VBV | Verschieberichtung der vorderen Blende |

VBVH Verschieberichtung der Hebelverstellung für die vordere Blende

VM Vorderer Mittenlichtstrahl

VM' Vorderer Mittenlichtstrahl mit Strahlversatz durch transparente Objektauflage TOA beziehungsweise Glasplatte

VR Verschieberichtung

ω Neigungswinkel der vorderen Blende BLV gegenüber der Objektebene OE

X X-Koordinatenachse des XYZ-Koordinatensystems

Y Y-Koordinatenachse des XYZ-Koordinatensystems

YH Y-Koordinate der hinteren Drehachse DAH

Z Z-Koordinatenachse des XYZ-Koordinatensystems

ZEP1 Z-Koordinate der Eintrittspupille für das Objektiv Nr. 1 in der aktuellen Zoomvergrößerung

Zh1 Z-Koordinate der Blendenkante BK in der idealen Z-Blendenposition für das Objektiv Nr. 1 in der aktuellen Zoomvergrößerung

ZH Z-Koordinate der hinteren Drehachse DAH

ZHL Z-Koordinate der Leuchtfläche LFL

ZL Z-Koordinate der linken Blendenkante

ZR Z-Koordinate der rechten Blendenkante

Zvmax Größtmögliche Z-Koordinate der vorderen Blendenkante ohne Tisch

ZV Z-Koordinate der vorderen Drehachse DAV

**Patentansprüche**

1. Vorrichtung zur Durchlichtbeleuchtung für Lichtmikroskope, insbesondere Stereomikroskope oder Makroskope, mit veränderlicher wirksamer Eintrittspupille eines Objektivs, mit einer Lichtquelle (LQ) zum Aussenden eines Beleuchtungslichtbündels, mit einer Halteeinrichtung (TOA) zum Halten einer zu untersuchenden Probe und mit mindestens einer Blendenkante (BK) zum Beschneiden des Beleuchtungslichtbündels, wobei die Blendenkante (BK) zwischen der Halteeinrichtung (TOA) und der Lichtquelle (LQ) angeordnet ist, wobei die Blendenkante (BK) sich quer zu einer optischen Achse (OA), insbesondere eines Objektivs (OBJ1, OBJ2, OBJ3), eines Lichtmikroskops erstreckt, welches in einem Betriebszustand an der Vorrichtung zur Durchlichtbeleuchtung positionierbar ist, und wobei ein Strahlengang des Beleuchtungslichts zwischen der Blendenkante (BK) und einer von der Halteeinrichtung (TOA) gehaltenen Probe frei ist von verstellbaren strahlfokussierenden Komponenten, wobei Mittel zum Abfragen einer Mikroskopeinstellung und/oder einer Mikroskopkonfiguration eines Lichtmikroskops, welches an der Vorrichtung zur Durchlichtbeleuchtung positionierbar ist, vorhanden sind, wobei Mittel zum variablen Positionieren der Blendenkante (BK) in Richtung (X, Y) quer zu der optischen Achse (OA) vorhanden sind und dass eine Steuereinrichtung vorhanden ist, welche dazu eingerichtet ist, abhängig von der Mikroskopeinstellung und/oder der Mikroskopkonfiguration die Blendenkante (BK) mit den Mitteln zum variablen Positionieren der Blendenkante (BK) in Richtung (X, Y) quer zu der optischen Achse (OA) zu positionieren, wobei die Mikroskopkonfiguration mindestens einen Typ des Zoomsystems und/oder eines ausgewählten Objektivs umfasst, wobei die Mikroskopkonfiguration mindestens einen Typ des Zoomsystems und/oder eines ausgewählten Objektivs umfasst, wobei zum Anpassen des Strahlengangs des Beleuchtungslichts an die wirksame Eintrittspupille des Objektivs (OBJ1, OBJ2, OBJ3) Mittel zum variablen Positionieren der Blendenkante (BK) in Richtung (Z) der optischen Achse (OA) vorhanden sind, wobei eine Position der Blendenkante (BK) in Richtung (Z) der optischen Achse (OA) unabhängig von einer Position der Blendenkante (BK) quer zur optischen Achse (OA) variierbar ist

**dadurch gekennzeichnet, dass**

mindestens zwei Blendenkanten (BK, BKL, BKR, BKV, BKH) vorhanden sind, welche relativ zueinander bewegbar sind, und dass die Steuereinrichtung dazu eingerichtet ist, die mindestens zwei Blendenkanten (BK, BKL, BKR, BKV, BKH) abhängig von Mikroskopeinstellung und/oder Mikroskopkonfiguration zu positionieren.

2. Vorrichtung nach Anspruch 1,
**dadurch gekennzeichnet,**
**dass** Mittel zum Abfragen eines Mikroskoptyps eines Lichtmikroskops, welches an der Vorrichtung zur Durchlichtbeleuchtung positionierbar ist, vorhanden sind und
**dass** die Steuereinrichtung dazu eingerichtet ist, abhängig von dem Mikroskoptyp die Blendenkanten (BK, BKL, BKR, BKV, BKH) mit den Mitteln zum variablen Positionieren der Blendenkanten (BK, BKL, BKR, BKV, BKH) in Richtung (X, Y) quer zur optischen Achse (OA) zu positionieren.

3. Vorrichtung nach Anspruch 2,
**dadurch gekennzeichnet,**
**dass** die Steuereinrichtung dazu eingerichtet ist, mindestens für die folgenden Mikroskoptypen unterschiedliche Positionseinstellungen der Blendenkanten (BK, BKL, BKR, BKV, BKH) vorzunehmen:

- Stereomikroskop mit einem auszuleuchtenden Kanal,
- Stereomikroskop mit zwei auszuleuchtenden Kanälen,
- Stereomikroskop mit einem auszuleuchtenden Kanal und einem Anregungskanal zur Fluoreszenzanregung,
- Stereomikroskop mit zwei auszuleuchtenden Kanälen und einem Anregungskanal zur Fluoreszenzanregung und

- Makroskop mit einem auszuleuchtenden Kanal.

**4.** Vorrichtung nach einem der Ansprüche 1 bis 3,
**dadurch gekennzeichnet,**
**dass** zum Verändern des Kontrasts Mittel zum variablen Positionieren der Blendenkanten (BK, BKL, BKR, BKV, BKH) in einer Richtung (VB) quer zur optischen Achse (OA) vorhanden sind und
**dass** die Steuereinrichtung dazu eingerichtet ist, abhängig von der Mikroskopkonfiguration die Blendenkanten (BK, BKL, BKR, BKV, BKH) mit den Mitteln zum variablen Positionieren der Blendenkanten (BK, BKL, BKR, BKV, BKH) in einer Richtung (VB) quer zur optischen Achse (OA) zu positionieren.

**5.** Vorrichtung nach einem der Ansprüche 1 bis 4,
**dadurch gekennzeichnet,**
**dass** die Mittel zum Abfragen eines Mikroskoptyps und/oder die Mittel zum Abfragen einer Mikroskopeinstellung eine elektrische Schnittstelle, insbesondere einen Controller Area Network-Bus (CAN-Bus), aufweisen.

**6.** Vorrichtung nach einem der Ansprüche 1 bis 5,
**dadurch gekennzeichnet,**
**dass** mindestens eine Blendenkante (BK) durch ein LCD-Array gebildet ist.

**7.** Vorrichtung nach Anspruch 6,
**dadurch gekennzeichnet,**
**dass** eine der mindestens zwei Blendenkanten (BK, BKL, BKR, BKV, BKH) durch eine Irisblende gebildet ist.

**8.** Vorrichtung nach einem der Ansprüche 1 bis 7,
**dadurch gekennzeichnet,**
**dass** die Steuereinrichtung eine Speichereinrichtung aufweist, in der Positionseinstellungen der mindestens zwei Blendenkanten (BK, BKL, BKR, BKV, BKH) zum Positionieren der mindestens zwei Blendenkanten (BK, BKL, BKR, BKV, BKH) abhängig von Mikroskopeinstellung und/oder Mikroskoptyp gespeichert sind.

**9.** Vorrichtung nach Anspruch 8,
**dadurch gekennzeichnet,**
**dass** ein Bedienelement (BE) vorhanden ist, über das durch einen Benutzer Positionsdaten zu einer eingestellten Position der mindestens zwei Blendenkanten (BK, BKL, BKR, BKV, BKH) in der Speichereinrichtung speicherbar und abrufbar sind.

**10.** Verfahren zur Durchlichtbeleuchtung für ein Lichtmikroskop mit veränderlicher wirksamer Eintrittspupille eines Objektivs, bei dem eine von einer Halteeinrichtung (TOA) gehaltene Probe mit Beleuchtungslicht von einer Lichtquelle (LQ) beaufschlagt wird und bei dem ein von der Lichtquelle (LQ) ausgehendes Beleuchtungslichtbündel von einer zwischen der Halteeinrichtung (TOA) und der Lichtquelle (LQ) angeordneten Blendenkante (BK) beschnitten wird, wobei insbesondere ein Strahlengang des Beleuchtungslichts zwischen der Blendenkante (BK) und der von der Halteeinrichtung (TOA) gehaltenen Probe frei ist von verstellbaren strahlfokussierenden Komponenten, wobei eine Mikroskopeinstellung und/oder eine Mikroskopkonfiguration abgefragt wird und wobei die Blendenkante (BK) sich quer zu einer optischen Achse (OA), insbesondere des Objektivs (OBJ1, OBJ2, OBJ3), erstreckt und abhängig von der Mikroskopeinstellung und/oder der Mikroskopkonfiguration in Richtung (X, Y) quer zu der optischen Achse (OA) positioniert wird, wobei die Mikroskopkonfiguration mindestens einen Typ des Zoomsystems und/oder eines ausgewählten Objektivs umfasst, wobei die Mikroskopeinstellung mindestens eine Zoomvergrößerung und/oder eine Position eines ausgewählten Objektivs umfasst, und wobei zum Anpassen des Strahlengangs des Beleuchtungslichts an die wirksame Eintrittspupille des Objektivs (OBJ1, OBJ2, OBJ3) Mittel zum variablen Positionieren der Blendenkante (BK) in Richtung (Z) der optischen Achse (OA) vorhanden sind, wobei eine Position der Blendenkante (BK) in Richtung (Z) der optischen Achse (OA) unabhängig von einer Position der Blendenkante (BK) quer zur optischen Achse (OA) variierbar ist
**dadurch gekennzeichnet, dass**
mindestens zwei Blendenkanten (BK, BKL, BKR, BKV, BKH) vorhanden sind, welche relativ zueinander bewegbar sind, und dass die Steuereinrichtung dazu eingerichtet ist, die mindestens zwei Blendenkanten (BK, BKL, BKR, BKV, BKH) abhängig von Mikroskopeinstellung und/oder Mikroskopkonfiguration zu positionieren.

**11.** Verfahren nach Anspruch 10,
**dadurch gekennzeichnet,**
**dass** für eine verwendete Mikroskopeinstellung und/oder für eine verwendete Mikroskopkonfiguration einem Benutzer verschiedene Positionseinstellungen der Blendenkanten (BK, BKL, BKR, BKV, BKH) angeboten werden, welche im Hinblick auf je einen Beleuchtungsparameter optimiert sind, wobei die Beleuchtungsparameter ein Maß sind für einen Intensitätsgradienten eines Mikroskopbilds in einer Richtung (X) quer zu den Blendenkanten (BK, BKL, BKR, BKV, BKH), einen Bildkontrast des Mikroskopbilds, einen Kontrastumfang, eine Bildhomogenität und/oder einen Schattenwurf im Mikroskopbild.

**12.** Mikroskopsystem mit einem Lichtmikroskop und einer Vorrichtung zur Durchlichtbeleuchtung nach einem der Ansprüche 1 bis 9.

13. Mikroskopsystem nach Anspruch 12,
**dadurch gekennzeichnet,**
**dass** in einem Abbildungsstrahlengang des Lichtmikroskops eine motorisierte Aperturblende (MAB) zum Einstellen einer Beobachtungsapertur vorhanden ist und
**dass** die Steuereinrichtung dazu eingerichtet ist, die Aperturblende (MAB) abhängig von Positionen der mindestens zwei Blendenkanten (BK, BKL, BKR, BKV, BKH) zu positionieren.

**Claims**

1. Apparatus for transmitted-light illumination for light microscopes, in particular stereo microscopes or macroscopes, having a variable effective entrance pupil of an objective, having a light source (LQ) for emitting an illumination beam, having a holding device (TOA) for holding a sample to be examined, and having a stop edge (BK) for clipping the illumination beam, wherein the stop edge (BK) is arranged between the holding device (TOA) and the light source (LQ), wherein the stop edge (BK) extends transversely to an optical axis (OA), in particular of an objective (OBJ1, OBJ2, OBJ3), of a light microscope, which is positionable, in an operating state, at the apparatus for transmitted-light illumination, and wherein a beam path of the illumination light between the stop edge (BK) and a sample that is held by the holding device (TOA) is free from adjustable beam-focusing components, wherein means for retrieving a microscope setting and/or a microscope configuration of a light microscope that is positionable at the apparatus for transmitted-light illumination are present, wherein means for variably positioning the stop edge (BK) in the direction (X, Y) transversely to the optical axis (OA) are present, and that a control device is present, which is configured to position the stop edge (BK) with the means for variably positioning the stop edge (BK) in the direction (X, Y) transversely to the optical axis (OA) in dependence on the microscope setting and/or the microscope configuration, wherein the microscope configuration comprises at least one type of the zoom system and/or of a selected objective, wherein the microscope configuration comprises at least one type of the zoom system and/or of a selected objective, wherein means for variably positioning the stop edge (BK) in the direction (Z) of the optical axis (OA) are present for adapting the beam path of the illumination light to the effective entrance pupil of the objective (OBJ1, OBJ2, OBJ3), wherein a position of the stop edge (BK) in the direction (Z) of the optical axis (OA) is variable independently of a position of the stop edge (BK) transversely to the optical axis (OA),
**characterized in that**
at least two stop edges (BK, BKL, BKR, BKV, BKH) are present, which are movable relative to one another, and **in that** the control device is configured to position the at least two stop edges (BK, BKL, BKR, BKV, BKH) in dependence on the microscope setting and/or microscope configuration.

2. Apparatus according to Claim 1,
**characterized**
**in that** means for retrieving the microscope type of a light microscope, which is positionable at the apparatus for transmitted-light illumination, are present and in that the control device is configured to position the stop edges (BK, BKL, BKR, BKV, BKH) with the means for variably positioning the stop edges (BK, BKL, BKR, BKV, BKH) in the direction (X, Y) transversely to the optical axis (OA) in dependence on the microscope type.

3. Apparatus according to Claim 2,
**characterized**
**in that** the control device is configured to perform different position settings of the stop edges (BK, BKL, BKR, BKV, BKH) at least for the following microscope types:

   - stereo microscope having a channel that is to be fully illuminated,
   - stereo microscope having two channels that are to be fully illuminated,
   - stereo microscope having a channel that is to be fully illuminated and an excitation channel for fluorescence excitation,
   - stereo microscope having two channels that are to be fully illuminated and an excitation channel for fluorescence excitation, and
   - macroscope having a channel that is to be fully illuminated.

4. Apparatus according to one of Claims 1 to 3,
**characterized**
**in that** means for variably positioning the stop edges (BK, BKL, BKR, BKV, BKH) in a direction (VB) transversely to the optical axis (OA) are present for changing the contrast, and
**in that** the control device is configured to position the stop edges (BK, BKL, BKR, BKV, BKH) with the means for variably positioning the stop edges (BK, BKL, BKR, BKV, BKH) in a direction (VB) transversely to the optical axis (OA) in dependence on the microscope configuration.

5. Apparatus according to one of Claims 1 to 4,
**characterized**
**in that** the means for retrieving a microscope type and/or the means for retrieving a microscope setting have an electrical interface, in particular a controller area network bus (CAN bus).

6. Apparatus according to one of Claims 1 to 5, **characterized in that** at least one stop edge (BK) is formed by an LCD array.

7. Apparatus according to Claim 6, **characterized in that** one of the at least two stop edges (BK, BKL, BKR, BKV, BKH) is formed by an iris diaphragm.

8. Apparatus according to one of Claims 1 to 7, **characterized in that** the control device has a storage device, in which position settings of the at least two stop edges (BK, BKL, BKR, BKV, BKH) are stored for positioning the at least two stop edges (BK, BKL, BKR, BKV, BKH) in dependence on the microscope setting and/or microscope type.

9. Apparatus according to Claim 8, **characterized in that** an operating element (BE) is present, by way of which position data relating to a set position of the at least two stop edges (BK, BKL, BKR, BKV, BKH) are able to be stored in the storage device and retrievable therefrom by a user.

10. Method for transmitted-light illumination for a light microscope having a variable effective entrance pupil of an objective, in which a sample held by a holding device (TOA) is subjected to illumination light from a light source (LQ) and in which an illumination beam coming from the light source (LQ) is clipped by a stop edge (BK) arranged between the holding device (TOA) and the light source (LQ), wherein in particular a beam path of the illumination light between the stop edge (BK) and the sample held by the holding device (TOA) is free from adjustable beam-focusing components, wherein a microscope setting and/or a microscope configuration is retrieved and wherein the stop edge (BK) extends transversely to an optical axis (OA), in particular of the objective (OBJ1, OBJ2, OBJ3), and is positioned in the direction (X, Y) transversely to the optical axis (OA) in dependence on the microscope setting and/or the microscope configuration, wherein the microscope configuration comprises at least one type of the zoom system and/or of a selected objective, wherein the microscope setting comprises at least one zoom magnification and/or a position of a selected objective, and wherein means for variably positioning the stop edge (BK) in the direction (Z) of the optical axis (OA) are present for adapting the beam path of the illumination light to the effective entrance pupil of the objective (OBJ1, OBJ2, OBJ3), wherein a position of the stop edge (BK) in the direction (Z) of the optical axis (OA) is variable independently of a position of the stop edge (BK) transversely to the optical axis (OA), **characterized in that** at least two stop edges (BK, BKL, BKR, BKV, BKH) are present, which are movable relative to one another, and **in that** the control device is configured to position the at least two stop edges (BK, BKL, BKR, BKV, BKH) in dependence on the microscope setting and/or microscope configuration.

11. Method according to Claim 10, **characterized in that** various position settings of the stop edges (BK, BKL, BKR, BKV, BKH), which are optimized with respect to in each case one illumination parameter, are offered to a user for a microscope setting used and/or for a microscope configuration used, wherein the illumination parameters are a measure of an intensity gradient of a microscope image in a direction (X) transversely to the stop edges (BK, BKL, BKR, BKV, BKH), of an image contrast of the microscope image, of a contrast range, of an image homogeneity and/or of shadowing in the microscope image.

12. Microscope system with a light microscope and an apparatus for transmitted-light illumination according to one of Claims 1 to 9.

13. Microscope system according to Claim 12, **characterized in that** a motorized aperture stop (MAB) for setting an observation aperture is present in an imaging beam path of the light microscope, and **in that** the control device is configured to position the aperture stop (MAB) in dependence on positions of the at least two stop edges (BK, BKL, BKR, BKV, BKH).

**Revendications**

1. Arrangement d'éclairage par transmission pour microscope optique, notamment microscope stéréoscopique ou macroscope, avec pupille d'entrée efficace variable d'un objectif, comprenant une source de lumière (LQ) destinée à émettre un faisceau de lumière d'éclairage, comprenant un dispositif de maintien (TOA) destiné à maintenir un échantillon examiné et au moins une arête de diaphragme (BK) destinée à rogner le faisceau de lumière d'éclairage, l'arête de diaphragme (BK) étant disposée entre le dispositif de maintien (TOA) et la source de lumière (LQ), l'arête de diaphragme (BK) s'étendant transversalement par rapport à un axe optique (OA), notamment d'un objectif (OBJ1, OBJ2, OBJ3) d'un microscope optique qui, dans un état opérationnel, peut être positionné au niveau de l'arrangement d'éclairage par transmission, et un trajet de rayon de la lumière d'éclairage entre l'arête de diaphragme (BK) et un échantillon maintenu par le dispositif de maintien (TOA) étant exempt de composants positionnables de concentration du rayon, des moyens servant à interroger un réglage de microscope et/ou une configuration de microscope d'un microscope optique, lequel peut être positionné au niveau de l'arrangement d'éclairage par transmission, étant présents, des moyens servant au positionnement variable de l'arête de diaphragme (BK) dans la direction (X, Y) transversalement par rapport à l'axe optique (OA) étant présents et qu'un dispositif de commande est présent, lequel est conçu pour positionner l'arête de diaphragme (BK) transversalement par rapport à l'axe optique (OA) avec les moyens servant au positionnement variable de l'arête de diaphragme (BK) dans la direction (X, Y) en fonction du réglage de microscope et/ou de la configuration de microscope, la configuration de microscope comprenant au moins un type du système de zoom et/ou d'un objectif sélectionné, la configuration de microscope comprenant au moins un type du système de zoom et/ou d'un objectif sélectionné, des moyens servant au positionnement variable de l'arête de diaphragme (BK) dans la direction (Z) de l'axe optique (OA) étant présents pour l'adaptation du trajet de rayon de la lumière d'éclairage à la pupille d'entrée efficace de l'objectif (OBJ1, OBJ2, OBJ3), une position de l'arête de diaphragme (BK) dans la direction (Z) de l'axe optique (OA) pouvant être modulée indépendamment d'une position de l'arête de diaphragme (BK) transversalement par rapport à l'axe optique (OA) **caractérisé en ce que** au moins deux arêtes de diaphragme (BK, BKL, BKR, BKV, BKH) sont présentes, lesquelles peuvent être déplacées les unes par rapport aux autres, et **en ce que** le dispositif de commande est configuré pour positionner les au moins deux arêtes de diaphragme (BK, BKL, BKR, BKV, BKH) en fonction du réglage de microscope et/ou de la configuration de microscope.

2. Arrangement selon la revendication 1, **caractérisé en ce que** des moyens servant à interroger un type de microscope d'un microscope optique, lequel peut être positionné au niveau de l'arrangement d'éclairage par transmission, sont présents et **en ce que** le dispositif de commande est configuré pour positionner les arêtes de diaphragme (BK, BKL, BKR, BKV, BKH) avec les moyens servant au positionnement variable des arêtes de diaphragme (BK, BKL, BKR, BKV, BKH) dans la direction (X, Y) transversalement par rapport à l'axe optique (OA) en fonction du type de microscope.

3. Arrangement selon la revendication 2, **caractérisé**

**en ce que** le dispositif de commande est configuré pour procéder à des réglages de position différents des arêtes de diaphragme (BK, BKL, BKR, BKV, BKH) au moins pour les types de microscopes suivants :

- microscope stéréoscopique avec un canal à éclairer,
- microscope stéréoscopique avec deux canaux à éclairer,
- microscope stéréoscopique avec un canal à éclairer et un canal d'excitation servant à l'excitation en fluorescence,
- microscope stéréoscopique avec deux canaux à éclairer et un canal d'excitation servant à l'excitation en fluorescence et
- macroscope avec un canal à éclairer.

4. Arrangement selon l'une des revendications 1 à 3, **caractérisé en ce que** des moyens servant au positionnement variable des arêtes de diaphragme (BK, BKL, BKR, BKV, BKH) dans une direction (VB) transversale par rapport à l'axe optique (OA) sont présents pour modifier le contraste et **en ce que** le dispositif de commande est configuré pour positionner les arêtes de diaphragme (BK, BKL, BKR, BKV, BKH) avec les moyens servant au positionnement variable des arêtes de diaphragme (BK, BKL, BKR, BKV, BKH) dans une direction (VB) transversale par rapport à l'axe optique (OA) en fonction de la configuration de microscope.

5. Arrangement selon l'une des revendications 1 à 4, **caractérisé en ce que** les moyens servant à interroger un type de microscope et/ou les moyens servant à interroger un réglage de microscope possèdent une interface électrique, notamment un bus CAN (Controller Area Network).

6. Arrangement selon l'une des revendications 1 à 5, **caractérisé en ce qu'**au moins une arête de diaphragme (BK) est formée par une matrice de LCD.

7. Arrangement selon la revendication 6, **caractérisé en ce que** l'une des au moins deux arêtes de diaphragme (BK, BKL, BKR, BKV, BKH) est formée par un diaphragme à iris.

8. Arrangement selon l'une des revendications 1 à 7, **caractérisé en ce que** le dispositif de commande possède un dispositif de mémorisation dans lequel sont mémorisés les réglages de position des au moins deux arêtes de diaphragme (BK, BKL, BKR, BKV, BKH) en vue de positionner les au moins deux arêtes de diaphragme (BK, BKL, BKR, BKV, BKH) en fonction du réglage de microscope et/ou du type de microscope.

9. Arrangement selon la revendication 8, **caractérisé en ce qu'**un élément d'opération (BE) est présent, par le biais duquel des données de position à propos d'une position réglée des au moins deux arêtes de diaphragme (BK, BKL, BKR, BKV, BKH) peuvent être mémorisées et interrogées dans le dispositif de mémorisation par un opérateur.

10. Procédé d'éclairage par transmission pour un microscope optique avec pupille d'entrée efficace variable d'un objectif, avec lequel un échantillon maintenu par un dispositif de maintien (TOA) est exposé à de la lumière d'éclairage provenant d'une source de lumière (LQ) et avec lequel un faisceau de lumière d'éclairage émanant de la source de lumière (LQ) est rogné par une arête de diaphragme (BK) disposée entre le dispositif de maintien (TOA) et la source de lumière (LQ), un trajet de rayon de la lumière d'éclairage entre l'arête de diaphragme (BK) et un échantillon maintenu par le dispositif de maintien (TOA) étant notamment exempt de composants positionnables de concentration du rayon, un réglage de microscope et/ou une configuration de microscope étant interrogé et l'arête de diaphragme (BK) s'étendant transversalement par rapport à un axe optique (OA), notamment de l'objectif (OBJ1, OBJ2, OBJ3) et étant positionnée dans la direction (X, Y) transversalement par rapport à un axe optique (OA) en fonction du réglage de microscope et/ou de la configuration de microscope, la configuration de microscope comprenant au moins un type du système de zoom et/ou d'un objectif sélectionné, des moyens servant au positionnement variable de l'arête de diaphragme (BK) dans la direction (Z) de l'axe optique (OA) étant présents pour l'adaptation du trajet de rayon de la lumière d'éclairage à la pupille d'entrée efficace de l'objectif (OBJ1, OBJ2, OBJ3), une position de l'arête de diaphragme (BK) dans la direction (Z) de l'axe optique (OA) pouvant être modulée indépendamment d'une position de l'arête de diaphragme (BK) transversalement par rapport à l'axe optique (OA)
**caractérisé en ce que**
au moins deux arêtes de diaphragme (BK, BKL, BKR, BKV, BKH) sont présentes, lesquelles peuvent être déplacées les unes par rapport aux autres, et **en ce que** le dispositif de commande est configuré pour positionner les au moins deux arêtes de diaphragme (BK, BKL, BKR, BKV, BKH) en fonction du réglage de microscope et/ou de la configuration de microscope.

11. Procédé selon la revendication 10, **caractérisé en ce que** pour un réglage de microscope utilisé et/ou pour une configuration de microscope utilisée, différents réglages de position des arêtes de diaphragme (BK, BKL, BKR, BKV, BKH) sont proposés à un utilisateur, lesquels sont optimisés à chaque fois du point de vue d'un paramètre d'éclairage, les paramètres d'éclairage étant une mesure pour un gradient d'intensité d'une image de microscope dans une direction (X) transversale par rapport aux arêtes de diaphragme (BK, BKL, BKR, BKV, BKH), un contraste d'image de l'image de microscope, une étendue de contraste, une homogénéité d'image et/ou projection d'ombre dans l'image de microscope.

12. Système de microscope comprenant un microscope optique et un arrangement d'éclairage par transmission selon l'une des revendications 1 à 9.

13. Système de microscope selon la revendication 12, **caractérisé en ce qu'**un diaphragme d'ouverture motorisé (MAB) destiné à régler un paramètre d'observation est présent dans le trajet de rayon de représentation du microscope optique et **en ce que** le dispositif de commande est conçu pour positionner le diaphragme d'ouverture motorisé (MAB) en fonction des positions des au moins deux arêtes de diaphragme (BK, BKL, BKR, BKV, BKH).

## Fig. 1: STAND DER TECHNIK

## Fig. 2: STAND DER TECHNIK

**Fig. 3**

**Fig. 4**

**Fig. 5**

## Fig. 6

## Fig. 7

| Abbildungs-System | Discovery 3D | Discovery 2D | Lumar 3D | Lumar 2D | AxioZoom 2D |
|---|---|---|---|---|---|
| ideale Blendenform zur Streulicht-reduzierung | | | | | |
| angenäherte Blendenform zur Streulicht-reduzierung | | | | | |
| vereinfachte Blendenform zur Streulicht-reduzierung | | | | | |

Fig. 8

**Fig. 9**

**Fig. 10**

**Fig. 11**

**Fig. 12**

**Fig. 13**

**Fig. 14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004056685 A1
- DE 102007005790 A1
- US 20090303582 A1

- US 20010005280 A1
- US 4643540 A
- US 2005259320 A1